# EUROPEAN PATENT APPLICATION

(11) **EP 4 383 915 A1**
(43) Date of publication of application: **12.06.2024**
(21) Application number: 22852681.0
(22) Date of filing: 14.06.2022
(51) Int. Cl.: H04W 74/02, H04W 28/16, H04W 84/12

(54) **COMMUNICATION DEVICE AND COMMUNICATION METHOD**

(30) Priority: 04.08.2021 JP 2021128430
(71) Applicant: Panasonic Intellectual Property Corporation of America, Torrance, CA 90504 (US)
(72) Inventor: MINOTANI, Jun, Kadoma-shi, Osaka 571-0057 (JP); IWAI, Takashi, Kadoma-shi, Osaka 571-0057 (JP); URABE, Yoshio, Kadoma-shi, Osaka 571-0057 (JP)
(74) Representative: Grünecker Patent- und Rechtsanwälte PartG mbB
(86) International application number: PCT/JP2022/023850
(87) International publication number: WO 2023/013254

(57) **Abstract**

This communication device is provided with a reception circuit that receives a signal, and a control circuit that causes a transmission prohibition period-related configuration to differ according to whether the transmission source of the signal belongs to the same cooperative communication-related group as the communication device.

## Description

### Technical Field

The present disclosure relates to a communication apparatus and a communication method.

### Background Art

The Institute of Electrical and Electronics Engineers (IEEE) 802.11 Task Group (TG) has been developing technical specifications for 802.11be (hereinafter referred to as "11be") as a successor standard to 802.11ax (hereinafter referred to as "11ax").

### Citation List

### Non-Patent Literature

NPL 1
   IEEE 802.11-19/1582r2, Coordinated AP time/Frequency Sharing in a Transmit Opportunity in 11be
NPL 2
   IEEE 802.11-20/596r1, AP candidate set follow up
NPL 3
   IEEE 802.11-19/1019r0, Virtual BSS For Multi AP Coordination
NPL 4
   IEEE Std 802.11ax^{™}-2021
NPL 5
   IEEE 802.11-20/644r0, NAV Setting in Multi-AP Operation

### Summary of Invention

However, there is room for further study on how to control cooperative communication in radio communication.

Non-limiting embodiments of the present disclosure provide a communication apparatus and a communication method that improve the communication efficiency of cooperative communication in radio communication.

A communication apparatus according to one embodiment of the present disclosure includes a reception circuitry for receiving a signal and a control circuitry for changing settings related to the transmission inhibition period based on whether the sender of the signal belongs to a group related to cooperative communication that is common to the communication apparatus.

It should be noted that a general or specific embodiment may be implemented as a system, an apparatus, a method, an integrated circuit, a computer program, a storage medium, or any selective combination thereof.

According to an embodiment of the present disclosure, the communication efficiency of cooperative communication in radio communication can be improved.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG 1 illustrates an example of Multi-Access Point (MAP) coordination control;
FIG 2 illustrates an example of negotiation between Access Points (APs);
FIG 3 illustrates an example of an AP candidate set and a Virtual Basic Service Set (BSS);
FIG 4 illustrates an example of a Network Allocation Vector (NAV);
FIG 5 illustrates an example of NAV control in MAP coordination;
FIG 6 illustrates an example of NAV control in MAP coordination;
FIG 7 illustrates an example of NAV control in MAP coordination;
FIG 8 illustrates an example of NAV control in MAP coordination;
FIG 9 illustrates an example of BSS placement in MAP coordination;
FIG 10 is a sequence diagram illustrating an example of the operations performed by AP and Station (STA);
FIG 11 is a block diagram illustrating an examples of part of AP and STA configurations;
FIG 12 is a block diagram of an example configuration of AP;
FIG 13 is a block diagram of an example configuration of STA;
FIG 14 illustrates an example of a MAP coordination operation element;
FIG 15 illustrates an example of allocation of identifiers related to a coordination group;
FIG 16 illustrates an example of coordination group notification using user information;
FIG 17 illustrates an example of a MAP coordination information element;
FIG 18 illustrates an example of NAV control in MAP coordination according to Method 1;
FIG 19 illustrates an example of NAV control in MAP coordination according to Method 1;
FIG 20 illustrates an example of NAV control in MAP coordination according to Method 2;
FIG 21 illustrates an example of NAV control in MAP coordination according to Method 2;
FIG 22 illustrates an example of User Info field of Trigger frame according to Method 2-1;
FIG 23 illustrates an operation example of MAP coordination using a plurality of Transmission Opportunities (TXOPs);
FIG 24 illustrates an operation example of Sequential sounding in MAP coordination;
FIG 25 illustrates an operation example of Joint sounding in MAP coordination;
FIG 26 illustrates an example of MAP sounding;
FIG 27 illustrates an example of MAP sounding;
FIG 28 illustrates an example of Trigger frame format including a plurality of pieces of user information;
FIG 29 illustrates an example of NAV control based on the order in which user information is transmitted;
FIG 30 illustrates an example of NAV control based on common information in a Trigger frame;
FIG 31 illustrates an example of User Info field of Trigger frame;
FIG 32 illustrates an example of NAV control based on user information;
FIG 33 illustrates an example of User field of Extremely High Throughput (EHT)-SIG;
FIG 34 illustrates an example of STA Info field of Null Data Packet Announcement (NDPA);
FIG 35 illustrates an example of Universal SIG (U-SIG);
FIG 36 illustrates an operation example of Triggered TXOP Sharing in TXOP Sharing Mode = 1; and
FIG 37 illustrates an operation example of Triggered TXOP Sharing in TXOP Sharing Mode = 2.

### Description of Embodiments

Embodiments of the present disclosure are described in detail below with reference to the accompanying drawings.

### [Multi-AP (MAP) Coordination]

In 11be, Multi-AP (MAP) coordination (also referred to as "cooperative communication", for example) has been studied in which multiple access points (also referred to as "base stations", hereinafter referred to as "APs (Access Points)") cooperate with each other and perform transmission and reception (refer to, for example, NPL 1).

In MAP coordination, for example, an AP that has obtained a channel usage period (TXOP: Transmission Opportunity) is called a "Sharing AP". The AP may obtain a TXOP by using, for example, Carrier Sense Multiple Access/Collision Avoidance (CSMA/CA).

In MAP coordination, for example, an AP that is cooperatively controlled by a Sharing AP is referred to as a "Shared AP".

In MAP coordination, for example, a terminal (also called a station (STA) or non-AP STA) that belongs to (for example, belongs to or associates with) a Sharing AP may be called a "Sharing STA", and a STA that belongs to a Shared AP may be called a "Shared STA".

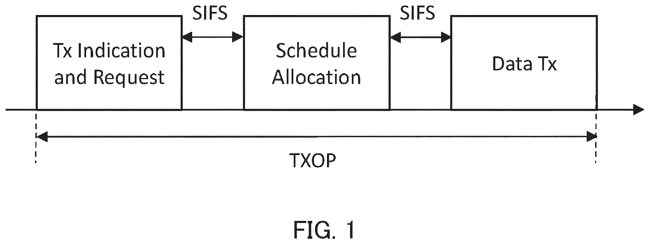

FIG 1 illustrates an example of a method for controlling MAP coordination. In FIG 1, for example, a MAP coordination process is divided into three phases, that is, a "Tx indication and request" phase, a "Schedule allocation" phase, and a "Data Tx" phase.

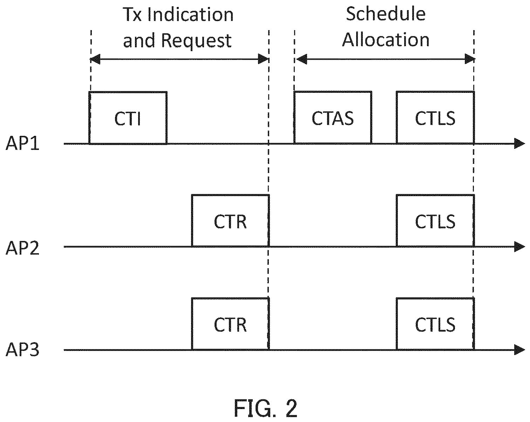

FIG 2 illustrates an example of negotiation between APs (for example, a Sharing AP and a Shared AP) (for example, the Tx indication and request phase and the Schedule allocation phase) in MAP coordination. In the example illustrated in FIG 2, AP1 can be a Sharing AP, and AP2 and AP3 can be Shared APs.

As illustrated in FIG 2, in the first-stage Tx indication and request phase, the Sharing AP (AP1) transmits a Coordinated AP TXOP Indication (CTI) frame to the Shared APs (AP2 and AP3) to request a response on whether the Shared AP can participate in MAP coordination. The Shared APs (AP2 and AP3) respond to the CTI from AP1 by transmitting, to the Sharing AP (AP1), a Coordinated AP TXOP Request (CTR) frame which indicates whether the shared AP participates in MAP coordination.

As illustrated in FIG 2, in the second-stage Schedule allocation phase, the Sharing AP (AP1) transmits a Coordinated AP TXOP AP Schedule frame (CTAS) frame to the Shared APs (AP2 and AP3) to notify each of the Shared APs (AP2 and AP3) of the resource information (for example, frequency and time resources) available to the Shared AP and the allocation information, such as the transmission start time. Subsequently, each of the Sharing AP (AP1) and Shared APs (AP2 and AP3) transmits, for example, a Coordinated AP TXOP Local Schedule (CTLS) frame to notify terminals under control of the AP of the allocation information, such as the available resource information and the transmission start time.

Thereafter, as illustrated in FIG 1, in the third-step Data Tx (for example, Data Tx phase), the AP and STA perform cooperative transmission on the basis of the allocation information. For example, the cooperative transmission in the Data TX phase may include Joint Transmission (JT), Coordinated Beamforming (CBF), Coordinated Spatial Reuse (CSR), Coordinated Orthogonal Frequency Division Multiple Access (COFDMA), or Coordinated Time Division Multiple Access (CTDMA). The cooperative transmission may be either of cooperative transmission in downlink (Downlink cooperative transmission) and cooperative transmission in uplink (Uplink cooperative transmission).

The method for controlling MAP coordination illustrated in FIGS. 1 and 2 is only an example. The method is not limited to the method illustrated in FIGS. 1 and 2.

### [Coordination Group]

Examples of a group that performs MAP coordination (also referred to as a "coordination group", for example) include an "AP candidate set" and a "Virtual Basic Service Set (Virtual BSS)" (refer to, for example, NPLs 2 and 3).

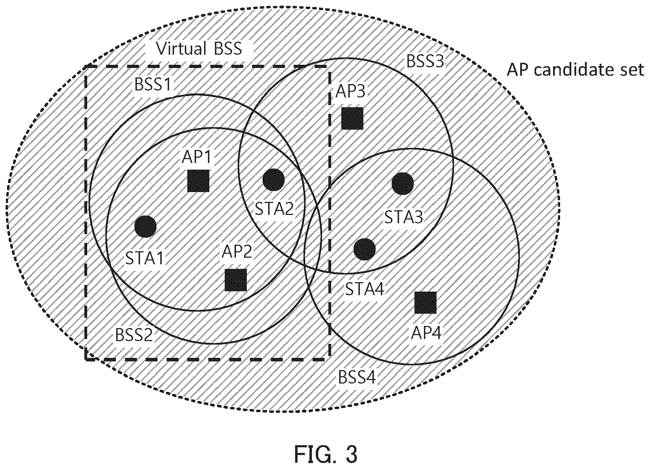

FIG 3 illustrates an example of the AP candidate set and the Virtual BSS.

As illustrated in FIG 3, an AP candidate set may be a group consisting of a plurality of APs (for example, AP1, AP2, AP3, and AP4). For example, from the APs included in the AP candidate set, a Sharing AP and a Shared AP that perform MAP coordination may be selected.

In addition, as illustrated in FIG 3, a Virtual BSS may be a group consisting of a plurality of Basic Service Sets (BSS) (for example, BSS1 and BSS2) for performing MAP coordination. APs participating in a Virtual BSS may have, for example, a common Service Set identifier (SSID). Furthermore, APs included in a Virtual BSS may share, for example, information regarding the STAs that belong to each of the BSSs (for example, the Association identifiers (AIDs) of the STAs).

### [Transmission Inhibition Period (NAV: Network Allocation Vector)]

The AP or STA that has obtained the TXOP (hereinafter referred to as, for example, a "terminal" or "AP/STA" for convenience) may notify other APs/STAs of information regarding the transmission inhibition period (Network Allocation Vector (NAV)) by setting the information in the transmission signal. The NAV notification causes other APs/STAs to stop channel access for a certain period of time using a virtual carrier sense (for example, virtually considering the carrier sense state to be busy). The NAV period may be notified, for example, in the Duration/ID subfield of the Medium Access Control (MAC) header or in the TXOP subfield of the SIG field of the preamble.

The AP/STA updates a counter value (for example, a NAV counter value) on the basis of, for example, the notified NAV period, subtracts a value from the NAV counter in accordance with the elapsed time, and determines that the virtual carrier sense state is idle if the NAV counter value is 0.

Two types ofNAVs are used in 11ax, that is, "intra-BSS NAV" and "Basic NAV", for example (refer to, for example, NPL 4).

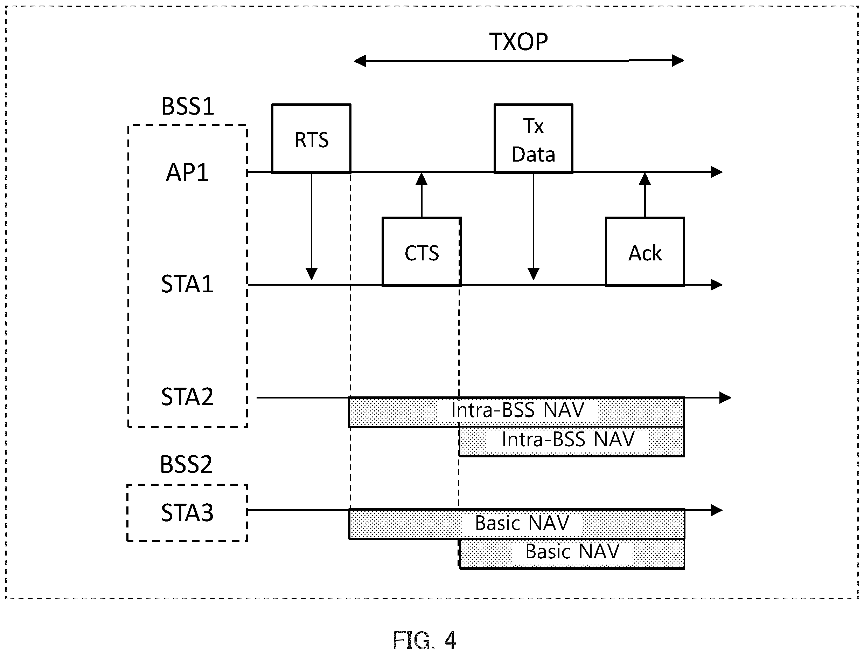

FIG 4 illustrates an example of an intra-BSS NAV and a Basic NAV.

In the example illustrated in FIG 4, AP1, STA1 and STA2 belong to BSS1, and STA3 belongs to BSS2. In the example illustrated in FIG 4, AP1 obtains TXOP and transmits a transmission signal (for example, Request-To-Send (RTS)) to STA1, and STA1 transmits an RTS response signal (for example, Clear-To-Send (CTS)) to AP1. Then, AP1 transmits transmission data (Tx Data) to STA1, and STA1 transmits a response signal (Acknowledge (Ack)) to AP1 for the transmission data.

As illustrated in FIG 4, when a signal destined for STA1 or a signal destined for AP1 is transmitted and received, STA2 and STA3 may perform control related to NAV (for example, set, update, or the like) on the basis of information included in the signal destined for STA1 or AP1 (for example, information regarding the TXOP).

For example, like STA2 illustrated in FIG 4, if a STA is notified of the NAV by using a signal transmitted from an AP/STA that belongs to the BSS to which the STA belongs (hereinafter referred to as a "common BSS"; BSS1 in FIG 4), the STA updates the Intra-BSS NAV.

In addition, like STA3 illustrated in FIG 4, if a STA is notified of the NAV by a signal transmitted from an AP/STA that belongs to a BSS different than a BSS (for example, BSS2) to which the STA belongs (hereinafter referred to as an "Overlapped BSS (OBSS)", the STA updates the Basic NAV.

Each of the Intra-BSS NAV and Basic NAV may be managed by individual NAV counters, for example. For example, an AP/STA that supports 11ax determines that the virtual carrier sense state is idle if the NAV counter values for both Intra-BSS NAV and Basic NAV are zero.

The control method related to a NAV in MAP coordination have not been fully studied. For example, in the NAV control method in 11ax, cooperative transmission in MAP coordination may be inhibited by a NAV. For this reason, a NAV control method in MAP coordination has been studied (refer to, for example, NPL 5).

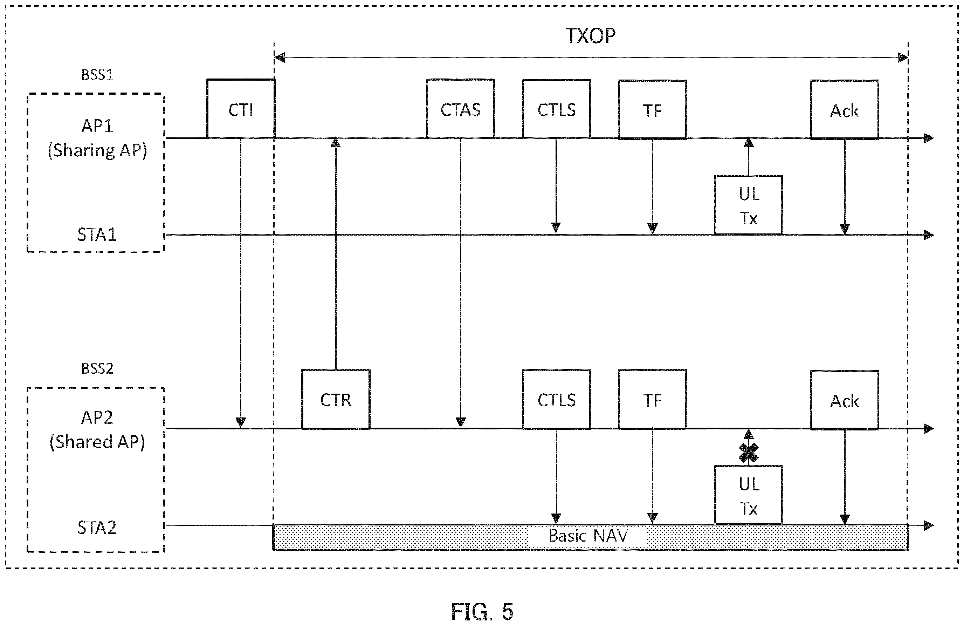

FIG 5 illustrates an example of the NAV control method in MAP coordination. In the example illustrated in FIG 5, AP1 (Sharing AP) and STA1 belong to BSS1, and AP2 (Shared AP) and STA2 belong to BSS2.

In the example illustrated in FIG 5, AP1 transmits a participation request signal (CTI) to AP2 to participate in MAP coordination. At this time, AP1 may use the CTI transmitted to AP2 to notify the surrounding AP/STAs of the duration of TXOP. In FIG 5, upon receiving the CTI destined for AP2 transmitted from AP1, STA2, which belongs to a BSS (BSS2) that differs from the BSS to which AP1 belongs, updates the Basic NAV on the basis of the CTI. STA2 may set the NAV period on the basis of, for example, the TXOP obtained by AP1. As illustrated in FIG 5, STA2 updates the Basic NAV. Therefore, even if AP2 transmits, to STA2, a Trigger frame (TF) indicating the transmission of an uplink signal (UL transmission), STA2 stops UL transmission due to the Basic NAV. Thus, the NAV control may prevent cooperative communication through MAP coordination.

A solution to the prevention of cooperative communication by NAV control has been discussed.

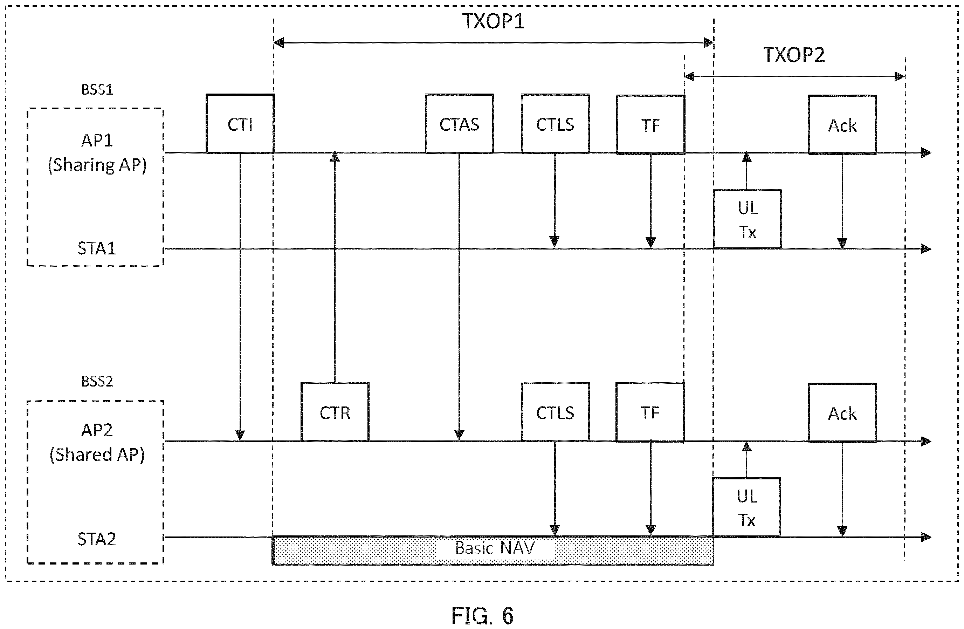

FIG 6 illustrates an example of a NAV control method which is a first solution.

As illustrated in FIG 6, the TXOP obtained by a Sharing AP (for example, AP1) is divided into a plurality of parts and is updated. For example, in FIG 6, a first TXOP period (TXOP1) notified by the CTI transmitted by AP1 may be set before the UL transmission of each of the STAs (for example, STA1 and STA2). In addition, a second TXOP period (TXOP2) notified by the Trigger frame transmitted by the APs (for example, AP1 and AP2) may be set before the times when the APs (for example, AP1 and AP2) finish transmitting response (for example, Ack) signals in response to the UL transmission of the STAs (for example, STA1 and STA2), respectively.

In FIG 6, for example, upon receiving the CTI destined for AP2 from AP1, STA2 updates the Basic NAV on the basis of the TXOP1 included in the received CTI. Thus, as illustrated in FIG 6, the NAV set by STA2 can be canceled (for example, the NAV counter is set to zero) before STA2 performs UL transmission. In addition, as illustrated in FIG 6, STA2 does not update the NAV even if STA2 receives the Trigger frame, because the Trigger frame indicating the duration of TXOP2 is a signal destined for STA2. Consequently, in FIG 6, STA2 can perform UL transmission (for example, cooperative communication).

The number of divided parts of TXOP in the method illustrated in FIG 6 is not limited to two, but can be three or more.

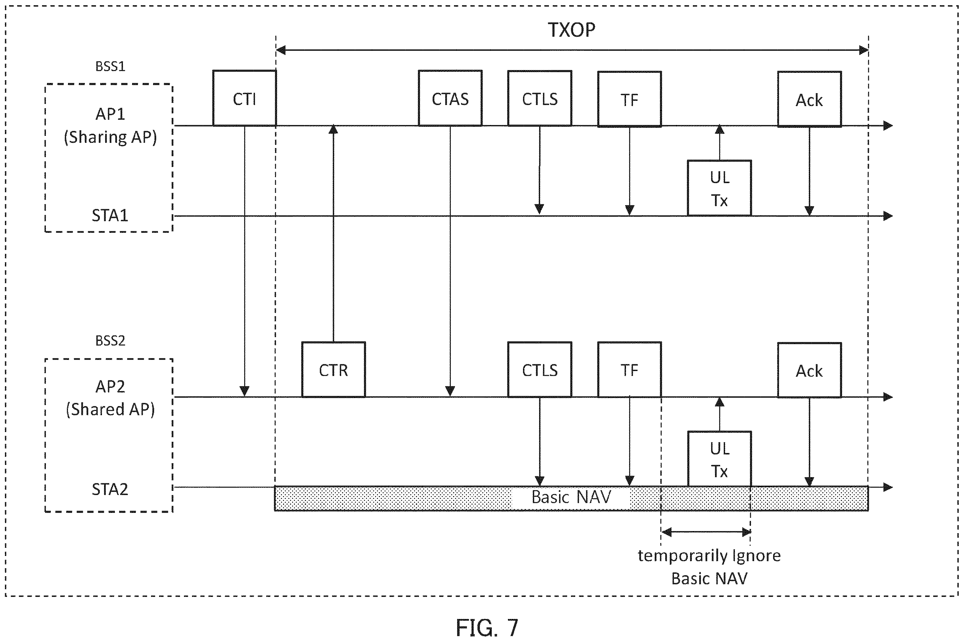

FIG 7 illustrates an example of a NAV control method which is a second solution.

As illustrated in FIG 7, upon receiving a MAP coordination participation request signal (CTI) destined for AP2 from AP1, STA2 updates the Basic NAV on the basis of the TXOP included in the received CTI. In FIG 7, for example, the Shared STA (STA2) that belongs to the Shared AP (AP2) may temporarily ignore the Basic NAV upon receiving a Trigger frame transmitted from the Shared AP. This allows STA2 to perform UL transmission (for example, cooperative communication) even when the NAV counter value of the Basic NAV is non-zero, as illustrated in FIG 7.

The above is the description of an example of the NAV control method in MAP coordination.

For example, even with the NAV control methods illustrated in FIGS. 6 and 7, an AP/STA may not be able to transmit a signal in MAP coordination.

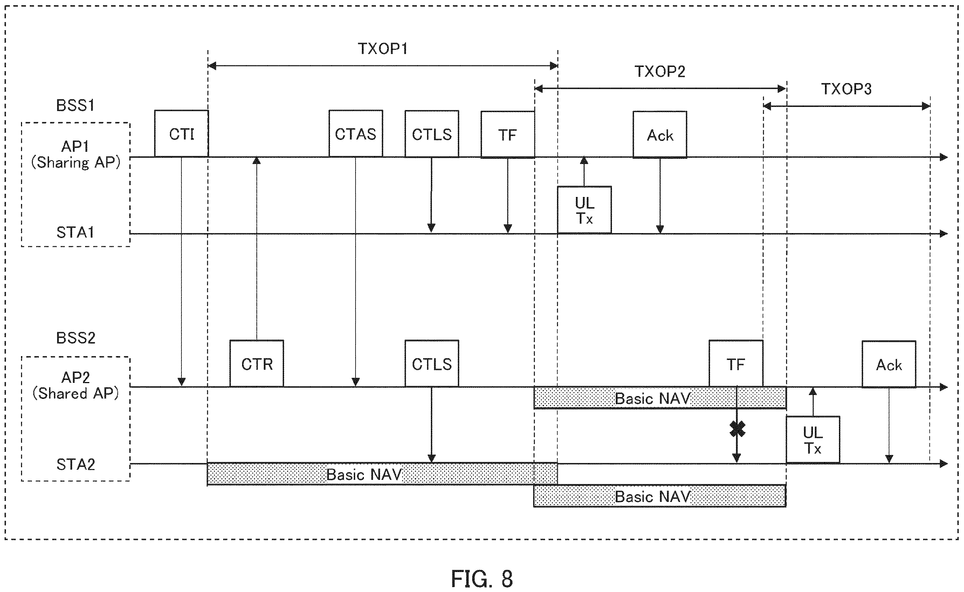

For example, FIG 8 illustrates an example of cooperative communication using CTDMA. As illustrated in FIG 8, in cooperative communication using CTDMA, AP1 and AP2 may control UL transmission by using different time resources for STA1 and STA2. In FIG 8, as in FIG 6, the TXOP obtained by AP1 (Sharing AP) may be divided into a plurality of TXOPs (for example, TXOP1, TXOP2, and TXOP3) on the basis of the timing of UL transmission of each of the STAs.

For example, as illustrated in FIG 8, upon receiving a MAP coordination participation request signal (CTI) destined for AP2 from AP1, STA2 updates the Basic NAV on the basis of TXOP1 included in the received CTI. In addition, as illustrated in FIG 8, upon receiving a Trigger frame destined for STA1 from AP1, AP2 and STA2 update the Basic NAV on the basis of TXOP2 included in the received Trigger frame.

As described above, in the example illustrated in FIG 8, AP2 stops transmitting a Trigger frame destined for STA2 in order to update the Basic NAV by the Trigger frame transmitted by AP1 to STA1. Thus, cooperative transmission in MAP coordination may be inhibited by the NAV.

For example, in the NAV control method of the second solution described above, the Shared STA may ignore the set Basic NAV and perform UL transmission when the UL transmission is triggered by the Shared AP to which the STA belongs. At this time, for example, when a Shared AP that does not participate in cooperative transmission fails to receive a signal from a Sharing AP (for example, a signal including information about TXOP), a case may arise where the Shared STA updates the Basic NAV while the Shared AP does not update the Basic NAV. In this case, when the Shared AP that does not participate in cooperative transmission transmits a Trigger frame, the Shared STA can ignore the set Basic NAV and perform UL transmission. Thus, in this case, for example, contention may occur between the UL transmission performed by the Shared STAthat does not participate in cooperative transmission and the cooperative transmission. That is, a rule that ignores the set NAV may cause contention.

According to one non-limiting embodiment of the present disclosure, a method is described for preventing the case where transmission and reception performed by an AP/STA is inhibited by NAV control and, thus, improving the communication efficiency of cooperative communication in MAP coordination.

According to one non-limiting embodiment of the present disclosure, the AP/STA may determine the control related to NAV on the basis of, for example, information about the sender of the received signal. According to one non-limiting embodiment of the present disclosure, by switching the control method related to NAV on the basis of the coordination group that performs MAP coordination, cooperative transmission can be properly performed without being inhibited by NAV in MAP coordination.

### [Configuration of Radio Communication System]

A radio communication system according to one embodiment of the present disclosure includes at least one coordination group that performs MAP coordination. The coordination group includes, for example, a plurality of APs 100 and at least one STA 200. For example, in Downlink (DL) communication, AP 100 corresponds to a "downlink radio transmission device", and STA 200 corresponds to a "downlink radio reception device". In Uplink (UL) communication, AP 100 corresponds to an "uplink radio reception device" and STA 200 corresponds to an "uplink radio transmission device". For example, AP 100 transmits a DL signal to another AP 100 or STA 200. In addition, for example, STA 200 transmits a UL signal on the basis of a signal received from AP 100.

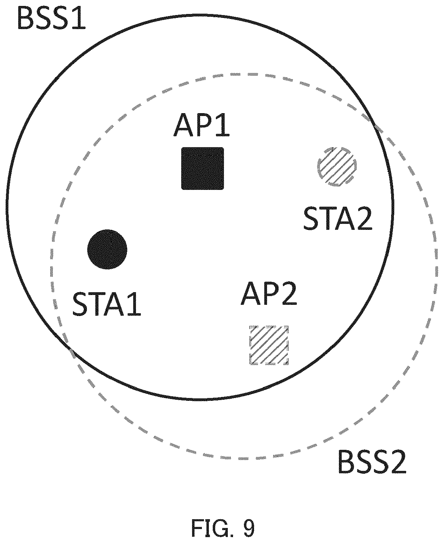

In the description below, as an example, a plurality of APs 100 and a plurality of STAs 200 perform MAP coordination. A method is described below in which, for example, as illustrated in FIG 9, two APs 100 (AP1 and AP2) transmit and receive control signals related to MAP coordination between the APs, AP1 and AP2 transmit Trigger frames to STA1 and STA2 by CTDMA, and STA1 and STA2 transmit UL signals.

As illustrated in FIG 9, AP1 and STA1 may belong to BSS1, and AP2 and STA2 may belong to BSS2. As illustrated in FIG 9, it is assumed that BSS1 and BSS2 overlap at least partially.

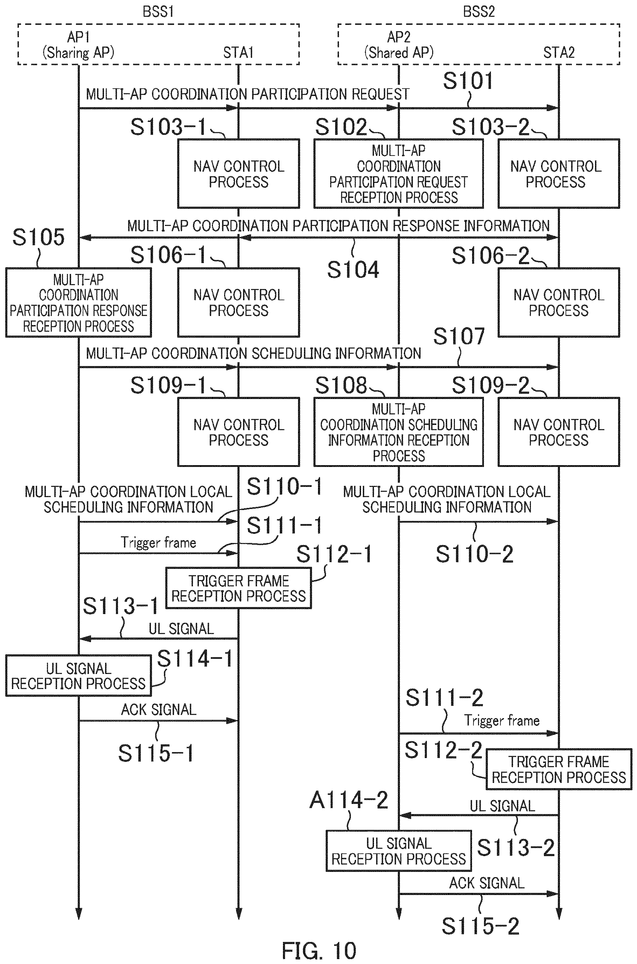

FIG 10 is a sequence diagram illustrating an example of the operation related to MAP coordination performed by AP 100 and STA 200 in a radio communication system according to one embodiment of the present disclosure.

In the example illustrated in FIG 10, AP1 operates as a Sharing AP that obtains TXOP and leads MAP coordination.

AP1, for example, transmits a MAP coordination participation request signal (for example, CTI) to AP2 (S101).

AP2, for example, performs a reception process for receiving the Multi-AP coordination participation request signal (S102). For example, AP2 may determine whether to participate in MAP coordination on the basis of the capability information (Capability) related to MAP coordination.

Each of STA1 and STA2, which are different from the destination of the MAP coordination participation request signal transmitted from AP1 (for example, AP2), may perform a control process related to NAV (for example, updating the NAV counter or selecting the type of NAV counter to be updated) (S103-1, S103-2). For example, STA1 and STA2 may determine the NAV control on the basis of the information about the NAV period notified by the MAP coordination participation request signal and whether AP1, which is the sender of the MAP coordination participation request signal, belongs to a common BSS. Thereafter, when each of STA1 and STA2 receives a signal with a different destination from that of the STA (for example, when the AID of STA1 or STA2 is not included in the destination information of the received signal), the NAV control process that is the same as in S103-1 or S103-2 may be performed (for example, S106-1 or S106-2, and S109-1 or S109-2).

AP2, for example, transmits, to AP1, MAP coordination participation response information (for example, CTR) including the information regarding whether to participate in MAP coordination (S104).

AP1 performs a reception process for receiving the Multi-AP coordination participation response information signal (S105). For example, AP1 may determine the MAP coordination method (for example, JT, CBF, CSR, COFDMA, or CTDMA) and perform scheduling on the basis of the information about the AP that participates in MAP coordination (for example, Shared AP). Then, AP1, for example, transmits the scheduling information for MAP coordination to the Shared AP (including, for example, AP2) (S107). AP2, for example, performs a reception process for receiving the MAP coordination scheduling information from AP1 (S108).

The MAP coordination scheduling information may include, for example, information about the cooperating APs 100 (for example, the SSID of AP 100 or the AID of STA 200), the resource information available to each of APs 100 (for example, the frequency resource information or time resource information), information about the amplitude or phase weighting in cooperative transmission (also referred to as steering, Spatial mapping, or transmission precoding), or transmission power information.

Each of AP1 and AP2 transmits, for example, MAP coordination local scheduling information (for example, CTLS) to an STA under control of the AP (S110-1 and S110-2).

The Multi-AP coordination local scheduling information may include, for example, the resource information (for example, frequency resource information, or receive timing information) for STA 200 to receive a DL MAP coordination signal or for STA 200 to transmit a UL MAP coordination signal (for example, frequency resource information, transmission timing information, or transmission power information). Each of AP 100 and STA 200 performs cooperative transmission on the basis of the Multi-AP coordination scheduling information and the Multi-AP coordination local scheduling information. The example illustrated in FIG 10 is an example of cooperative transmission performed when STA 200 transmits a UL signal in CTDMA. The cooperative transmission method is not limited to CTDMA. Another method may be employed.

For example, AP1 transmits a Trigger frame to STA1 within the time resource notified by the MAP coordination scheduling information (S111-1). STA1 performs a reception process for receiving the Trigger frame (S112-1) and transmits a UL signal to AP1 on the basis of the control information included in the Trigger frame (S113-1). AP1 performs a reception process for receiving the UL signal (S114-1) and, for example, transmits a response signal (Ack) to STA1 on the basis of the error detection result (S115-1).

In the case of CTDMA, AP2 and STA2 may then perform the same transmission/reception process as AP1 and STA1 (S111-2 to S115-2).

The above is the description of an example of the MAP coordination related operations performed by AP 100 and STA 200.

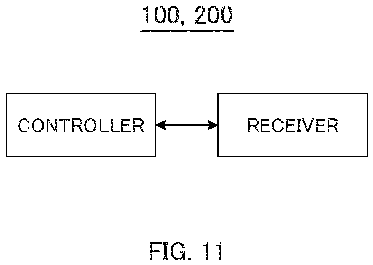

FIG 11 is a block diagram of an example configuration of a portion of AP 100 or STA 200 according to one embodiment of the present disclosure. In AP 100 or STA 200 (corresponding to, for example, a communication apparatus) illustrated in FIG 11, a receiver (corresponding to, for example, the reception circuitry) receives a signal. A controller (for example, corresponding to the control circuitry) changes the settings related to the transmission inhibition period (NAV) based on whether the sender of the signal belongs to a group related to cooperative communication (a common coordination group) that is common to the communication apparatus (for example, AP 100 or STA 200).

### [Configuration Example of AP 100]

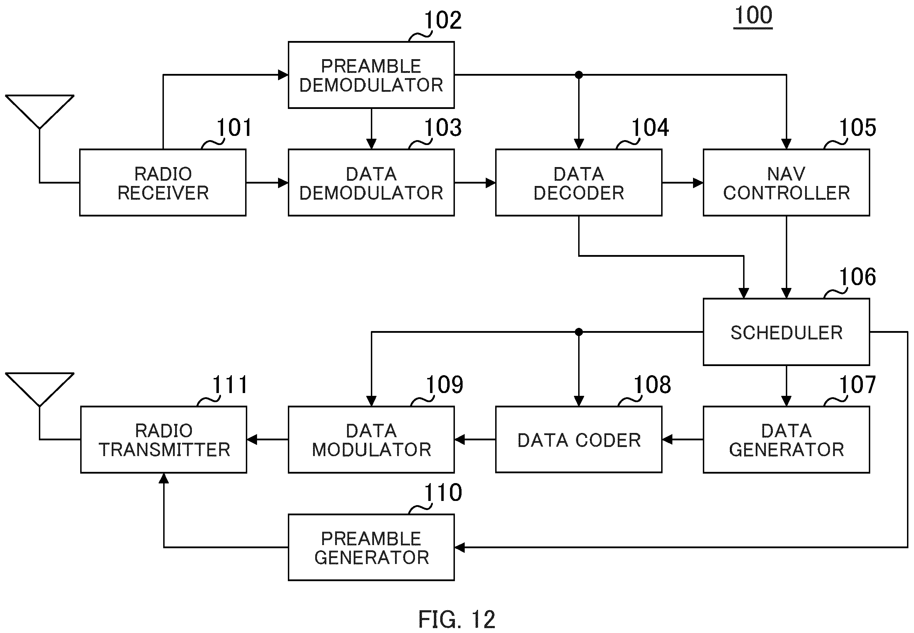

FIG 12 is a block diagram of an example configuration of AP 100 (for example, a downlink radio transmission device or uplink radio reception device). AP 100 illustrated in FIG 12 may include, for example, radio receiver 101, preamble demodulator 102, data demodulator 103, data decoder 104, NAV controller 105, scheduler 106, data generator 107, data coder 108, data modulator 109, preamble generator 110, and radio transmitter 111.

For example, at least one of preamble demodulator 102, data demodulator 103, data decoder 104, NAV controller 105, scheduler 106, data generator 107, data coder 108, data modulator 109, and preamble generator 110 may be included in the controller illustrated in FIG 11, and radio receiver 101 may be included in the transmitter illustrated in FIG 11.

Radio receiver 101 receives a signal transmitted from another AP 100 (for example, the downlink radio transmission device) or STA 200 (for example, the downlink radio reception device) via an antenna and performs a radio reception process, such as down-conversion and analog-to-digital (A/D) conversion, on the received signal. For example, radio receiver 101 divides the received signal subjected to the radio reception process into a preamble part (also referred to as a preamble signal) and a data part (also referred to as a data signal) and outputs the preamble signal to preamble demodulator 102 and the data signal to data demodulator 103.

Preamble demodulator 102 may perform, for example, a demodulation process, such as Fourier transform (for example, Fast Fourier Transform (FFT)), on the preamble signal input from radio receiver 101 and extract the control signal included in the preamble signal. The control signal may include, for example, reception control information, such as the frequency bandwidth (Bandwidth (BW)), Modulation and Coding Scheme (MCS), or error correction code used for demodulation and decoding of the data signal.

Preamble demodulator 102 performs, for example, channel estimation on the basis of a reference signal included in the preamble signal and derives a channel estimate value. Preamble demodulator 102 outputs, for example, the reception control information to data demodulator 103 and data decoder 104 and outputs the channel estimate value to data demodulator 103.

In a case where, for example, the preamble signal includes destination information (for example, STA-ID of user information included in the SIG field) or information about TXOP, preamble demodulator 102 outputs the information to NAV controller 105.

Data demodulator 103, for example, performs a Fourier transform (for example, FFT) on the data signal input from radio receiver 101 and demodulates the data signal subjected to the FFT on the basis of the reception control information and the channel estimate value input from preamble demodulator 102. Data demodulator 103 outputs the demodulated data signal to data decoder 104.

Data decoder 104, for example, decodes the demodulated data signal input from data demodulator 103 on the basis of the reception control information input from preamble demodulator 102. For example, data decoder 104 may perform an error check, such as a Cyclic Redundancy Check (CRC), on the decoded data signal. For example, when there is no error (that is, no decoding error) in the decoded data signal, data decoder 104 outputs the MAC header and destination information (for example, the AID of the user information included in the Trigger frame) included in the decoded data signal to NAV controller 105. Data decoder 104, for example, outputs the decoded data signal and the error check result to scheduler 106.

NAV controller 105, for example, controls the NAV by using at least one of the destination information and the TXOP information input from preamble demodulator 102 and the MAC header and the destination information input from data decoder 104.

For example, NAV controller 105 may determine whether to update the NAV individually for each of the NAV types based on whether the destination of the data signal is the AP 100 on the basis of the destination information or the sender address included in the MAC header. That is, NAV controller 105 may change the settings related to the NAV based on whether the sender of the data signal belongs to a coordination group common to AP 100. When updating the NAV, NAV controller 105 may determine the NAV period to be updated on the basis of at least one of the TXOP information and the value in the Duration/ID field included in the MAC header. NAV controller 105 outputs the NAV counter value for each of the NAV types to scheduler 106.

Scheduler 106 may, for example, determine whether to perform transmission in MAP coordination on the basis of the NAV counter value input from NAV controller 105. When the transmission is performed, scheduler 106 determines the scheduling information for the cooperative signal. The scheduling information for the cooperative signal may include, for example, the method for cooperative transmission in MAP coordination, information about users participating in the cooperative transmission, information about resources available to individual users, and MCS or error correction code. Scheduler 106 may determine the scheduling information for the cooperative signal on the basis of the scheduling information notified by the decoded data signal input from data decoder 104. Scheduler 106 outputs the scheduling information for the cooperative signal to data generator 107, data coder 108, data modulator 109, and preamble generator 110. When transmission is not performed by NAV, scheduler 106 need not output the scheduling information to data generator 107, data coder 108, and data modulator 109.

Data generator 107, for example, generates a data series to be transmitted to AP 100 (for example, a downlink radio transmission device) or STA 200 (for example, a downlink radio reception device) on the basis of the scheduling information for a cooperative signal input from scheduler 106 and outputs the data series to data coder 108.

For example, the data series transmitted to AP 100 may include a response signal to the MAP coordination participation request. For example, the data series transmitted to STA 200 may include the resource information for STA 200 to transmit or receive a coordination signal, a Trigger frame used to request transmission of a UL signal, and a response signal (Ack or Block Ack) to the signal transmitted from STA 200.

Data coder 108, for example, encodes the data series input from data generator 107 on the basis of the scheduling information input from scheduler 106 and outputs the coded data to data modulator 109.

Data modulator 109, for example, modulates and performs an inverse Fourier transform (for example, Inverse Fast Fourier Transform (IFFT)) on the coded data input from data coder 108 on the basis of the scheduling information input from scheduler 106 and outputs a modulated data signal to radio transmitter 111.

Preamble generator 110, for example, generates a preamble signal on the basis of the scheduling information input from scheduler 106. For example, preamble generator 110 performs modulation and an IFFT process on the preamble signal and outputs the preamble signal to radio transmitter 111.

Radio transmitter 111 generates a radio frame (also referred to as, for example, a "packet signal" or "packet") that includes the data signal input from data modulator 109 and the preamble signal input from preamble generator 110. Radio transmitter 111 performs a radio transmission process, such as Digital-to-Analog (D/A) conversion on the generated radio frame and up-conversion on the carrier frequency, and transmits a signal subjected to the radio transmission process to another AP 100 or STA 200 via an antenna.

### <Configuration Example of STA 200>

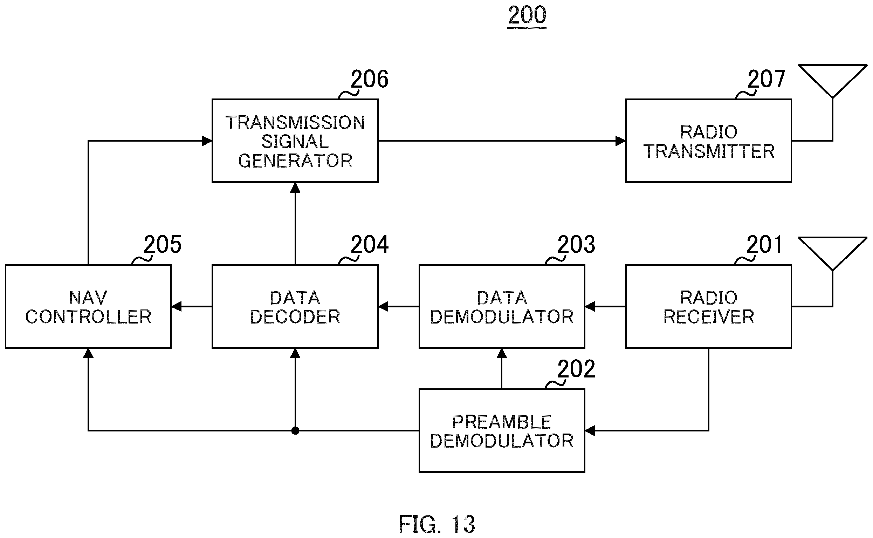

FIG 13 is a block diagram of an example configuration of STA 200 (for example, a downlink radio reception device). STA 200 illustrated in FIG 13 may include, for example, radio receiver 201, preamble demodulator 202, data demodulator 203, data decoder 204, NAV controller 205, transmission signal generator 206, and radio transmitter 207.

For example, at least one of preamble demodulator 202, data demodulator 203, data decoder 204, NAV controller 205, and transmission signal generator 206 may be included in the controller illustrated in FIG 11, and radio receiver 201 may be included in the receiver illustrated in FIG 11.

Radio receiver 201 receives the signal transmitted from the AP 100 (the downlink radio transmission device) via an antenna and performs a radio reception process, such as down-conversion and A/D conversion, on the received signal. Radio receiver 201 extracts the preamble from the signal subjected to the radio reception process and outputs the preamble to preamble demodulator 202. In addition, radio receiver 201 extracts the data signal from the signal subjected to the radio reception process and outputs the data signal to data demodulator 203.

Preamble demodulator 202 performs a demodulation process, such as FFT, on the preamble signal input from radio receiver 201 and extracts, for example, reception control information (for example, BW, MCS, or error correction code) used to demodulate and decode the data signal from the demodulated preamble signal. Preamble demodulator 202, for example, outputs the extracted reception control information to data demodulator 203 and data decoder 204. In addition, preamble demodulator 202 performs channel estimation on the basis of, for example, a reference signal included in the preamble signal and derives a channel estimate value. Preamble demodulator 202 outputs the channel estimate value to data demodulator 203. When the preamble signal includes destination information or information about TXOP, preamble demodulator 202, for example, outputs the information to NAV controller 205.

Data demodulator 203, for example, demodulates the data signal input from radio receiver 201 on the basis of the reception control information and channel estimate value input from preamble demodulator 202 and outputs the demodulated data signal destined for STA 200 to data decoder 204.

Data decoder 204, for example, decodes the data signal input from data demodulator 203 on the basis of the reception control information input from preamble demodulator 202 and performs error check, such as CRC. When there is no error in the decoded data, data decoder 204, for example, outputs the MAC header and the destination information included in the decoded data to NAV controller 205 and outputs the decoded data signal to transmission signal generator 206.

NAV controller 205, for example, controls NAV by using at least one of the destination information and the TXOP information input from preamble demodulator 202 and the MAC header and the destination information input from data decoder 204.

For example, NAV controller 205 may determine whether to update the NAV individually for each of the NAV types on the basis of the destination information or the sender address included in the MAC header (that is, based on whether the destination of the data signal is STA 200). That is, NAV controller 205 may change the settings related to NAV based on whether the sender of the data signal belongs to a coordination group that is common to STA 200. When updating the NAV, NAV controller 205 may determine the NAV period to be updated on the basis of, for example, at least one of the TXOP information and the value in the Duration/ID field of the MAC header. NAV controller 205 outputs the NAV counter value for each of the NAV types to transmission signal generator 206.

Transmission signal generator 206 determines whether to perform transmission on the basis of the NAV counter value input from NAV controller 205. When performing transmission, transmission signal generator 206 generates a transmission signal on the basis of, for example, the decoded data signal input from data decoder 204. For example, when the decoded data signal includes a Trigger frame, transmission signal generator 206 generates a data series to be transmitted in the Trigger-based Physical Layer Convergence Procedure Protocol Data Unit (TB PPDU) on the basis of the control information included in the Trigger frame. In addition, transmission signal generator 206 encodes the data series and performs modulation and an IFFT process in a predetermined frequency resource to generate a data signal. Transmission signal generator 206 adds a preamble signal to the data signal to generate a radio frame (for example, a packet signal) and outputs the radio frame to radio transmitter 207.

Radio transmitter 207 performs a radio transmission process, such as D/A conversion and up-conversion to the carrier frequency, on the radio frame input from transmission signal generator 206 and transmits the signal subjected to the radio transmission process to the AP 100 via an antenna.

### [Example of Operations Performed by AP 100 and STA200]

An example of the operations performed by AP 100 and STA 200 according to the present embodiment is described below.

According to one non-limiting embodiment of the present disclosure, for example, AP 100 and STA 200 may switch the control related to NAV based on whether the signal is transmitted from a terminal (for example, AP/STA) that belongs to a common coordination group. That is, AP 100 and STA 200 may, for example, may change the settings related to NAV based on whether the sender of the received signal belongs to a common coordination group.

The coordination group can be a group consisting of a plurality of APs 100 (for example, an AP candidate set or a destination AP group to which STA 200 transmits channel quality information) or a group consisting of a plurality of APs/STAs (for example, a Virtual BSS). The term "common coordination group" refers to, for example, a coordination group to which AP 100 or STA 200 that receives the signal belongs.

In the following description, a "terminal" is, for example, a non-AP terminal (non-AP STA). However, the term "terminal" may refer to either an AP terminal or a non-AP terminal unless otherwise specified. That is, one non-limiting embodiment of the present disclosure may be applied to either of the operations performed by AP 100 and STA 200.

A terminal (AP/STA) may determine whether to belong to a common coordination group that is common to the sender terminal of the received signal on the basis of the identifier (or the identification information) included in the received signal.

Examples of the identifier include BSSID, BSS color, AP candidate set ID, and Virtual BSSID.

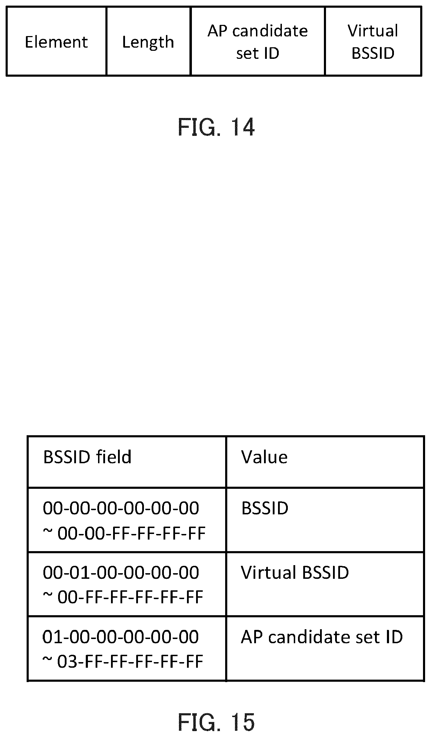

The identifier related to the coordination group may be included in, for example, the MAP coordination operation element illustrated in FIG 14 and be notified. As illustrated in FIG 14, the MAP coordination operation element may include an "AP candidate set ID" that identifies the AP candidate set and a "Virtual BSSID" that identifies the Virtual BSS. For example, AP 100 may set the Multi-AP coordination operation element in at least one of a beacon signal, a probe response signal, and an association response signal to notify STA 200 of the Multi-AP coordination operation element.

In addition, for example, at least one of the AP candidate set ID and the Virtual BSSID may be notified as part of the BSSID, as illustrated in FIG 15. For example, the BSSID is notified using the low 46 bits of the 48-bit BSSID field (without using the high 2 bits). For example, AP 100 may allocate a subset of bits (for example, 46 bits) of the BSSID field (the bits used for BSSID allocation) to at least one of the AP candidate set and the Virtual BSSID and may notify STA 200.

Furthermore, the terminal (AP/STA) may determine whether to belong to a common coordination group that is common to the sender terminal on the basis of the user information included in the received signal.

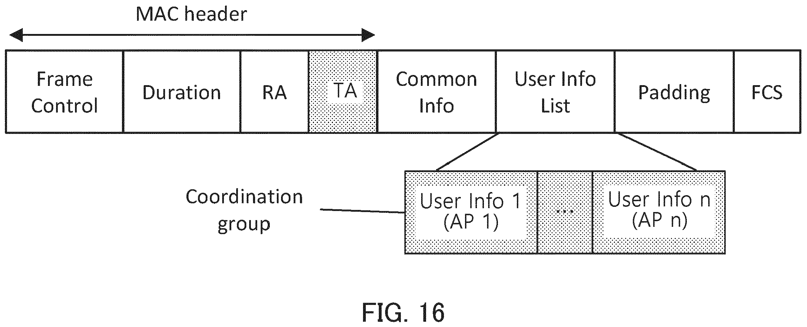

For example, as illustrated in FIG 16, it may be determined that the terminal corresponding to the information about the sender of a received signal (Transmitter Address (TA)) included in the MAC header of the received signal and the terminal corresponding to the user information (User Info) included in the received signal belong to a common coordination group.

For example, the terminal may determine whether to belong to a common coordination group based on whether the user information included in the received signal includes the user information destined for the terminal. For example, when the user information destined for the terminal is included in the user information included in the received signal, the terminal (AP/STA) may determine that the sender belongs to the common coordination group. That is, when the user information destined for the terminal is not included in the user information included in the received signal, the terminal (AP/STA) may determine that the sender does not belong to the common coordination group.

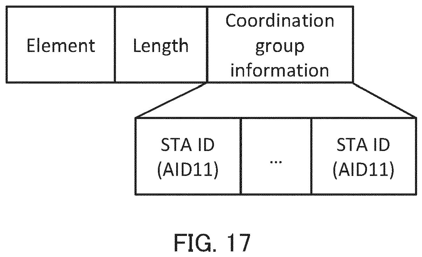

The terminal may determine whether the sender of the received signal belongs to the common coordination group on the basis of the information about the coordination group included in a beacon signal. For example, as illustrated in FIG 17, a "MAP coordination information element" including the identifier of a terminals that belongs to the coordination group may be notified to the terminal. The identifier included in the MAP coordination information element may be the identifier of AP 100 or the identifier of STA 200. The terminal may determine whether the terminal and the sender terminal of the received signal belong to a common coordination group on the basis of, for example, the MAP coordination information element that was included in a beacon signal and was notified in advance.

When the coordination group is a group consisting of a plurality of APs 100, STA 200 may determine whether the terminal and the sender terminal of the received signal belong to the coordination group based on whether the coordination group of the sender terminal of the received signal is the same as the coordination group of AP 100 to which STA 200 belongs.

When the coordination group is a group consisting of a plurality of APs/STAs, APs/STAs that do not participate in cooperative transmission need not be included in the coordination group.

An example of a NAV control method based on the method described above is described below.

### [Method 1]

According to Method 1, for example, when a terminal (AP/STA) receives (that is, is notified of) a signal including the information about TXOP from another terminal that belongs to the common coordination group, the terminal (AP/STA) does not update (or set) the NAV. That is, the terminal (AP/STA) determines not to update the NAV when notified of the TXOP by a signal transmitted from a terminal that belongs to the common coordination group.

For example, the terminal may determine whether the terminal and the sender terminal belong to a common coordination group on the basis of a signal received before or during the MAP coordination process.

### <Example 1 of Method 1>

According to Example 1 of Method 1, STA 200 does not update the NAV when the information about TXOP is notified by a signal transmitted by a terminal (AP/STA) that belongs to the common coordination group.

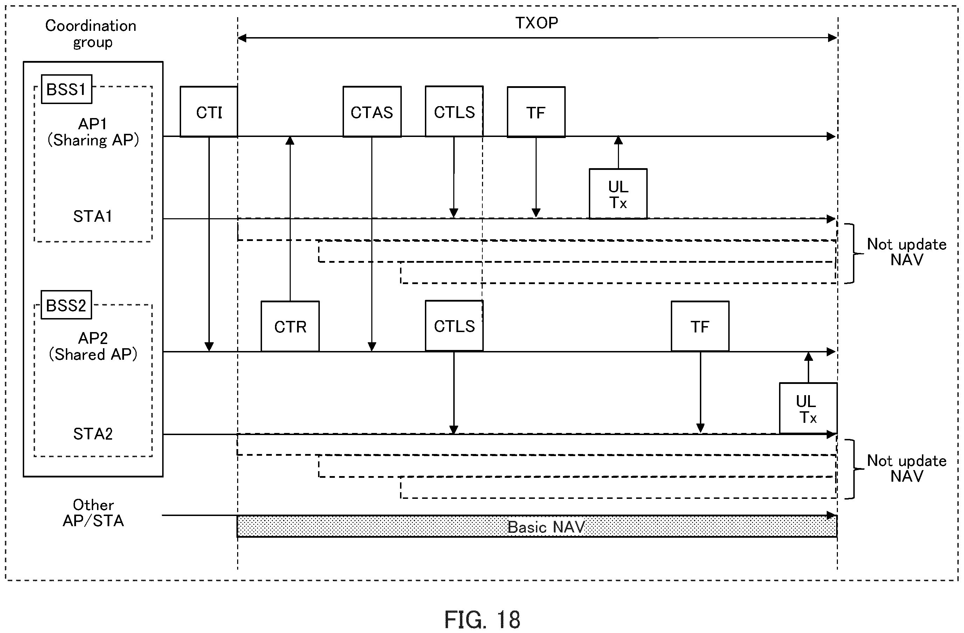

FIG 18 illustrates an example of the NAV control operation according to Example 1 of Method 1. In the example illustrated in FIG 18, AP1 (Sharing AP) and STA1 belong to BSS1, and AP2 (Shared AP) and STA2 belong to BSS2. In addition, in the example illustrated in FIG 18, AP1, AP2, STA1, and STA2 belong to a common coordination group.

When the above-described NAV control method specified in 1 1ax is applied to the example configuration of the radio communication system illustrated in FIG 18 and when, for example, STA1 and STA2 receive a signal related to the negotiation of MAP coordination (for example, CTI, CTR or CTAS) transmitted by AP1 and AP2, STA1 and STA2 update the NAV (Intra-BSS NAV or Basic NAV), because the received signal is not destined for STA1 and STA2. For this reason, the UL transmission (UL Tx) of STA1 and STA2 may be stopped.

In contrast, according to Example 1 of Method 1, STA 200 determines whether to update the NAV based on whether the received signal is transmitted from a terminal that belongs to the common coordination group.

For example, as illustrated in FIG 18, since STA1, STA2, and AP1 belong to a common coordination group, STA1 and STA2 do not update the NAV even when STA1 and STA2 receive a MAP coordination negotiation signal (for example, CTI or CTAS destined for AP2) transmitted from AP1.

Similarly, for example, as illustrated in FIG 18, since STA1, STA2, and AP2 belong to the common coordination group, STA1 and STA2 do not update the NAV even when STA1 and STA2 receive a MAP coordination negotiation signal (for example, CTR destined for AP1) transmitted from AP2.

Thus, as illustrated in FIG 18, after MAP coordination negotiation, STA1 and STA2 can perform UL transmission when UL transmission is indicated in the Trigger frame.

In contrast, as illustrated in FIG 18, a terminal (Other AP/STA) that does not belong to the common coordination group common to AP1 and AP2 sets Basic NAV when the terminal receives a MAP coordination negotiation signal from AP1 or AP2.

As described above, according to Example 1 of Method 1, STA 200 does not update the NAV when the sender of the received signal belongs to the common coordination group and updates the NAV when the sender of the received signal does not belong to the common coordination group. This NAV control enables STA 200 to transmit a UL signal without being inhibited by the NAV settings set by the transmission signal of AP 100 that belongs to the common coordination group, for example.

For example, even when STA 200 receives a transmission signal from a terminal that belongs to the coordination group, STA 200 may update the NAV as long as the transmission signal is not a signal related to MAP coordination. STA 200 may determine whether the signal differs from a signal related to MAP coordination on the basis of, for example, the identifier (for example, the BSSID or BSScolor for uncooperative transmission).

### <Example 2 of Method 1>

According to Example 2 of Method 1, AP 100 does not update the NAV when information about TXOP is notified by a signal transmitted from a terminal (AP/STA) that belongs to the common coordination group.

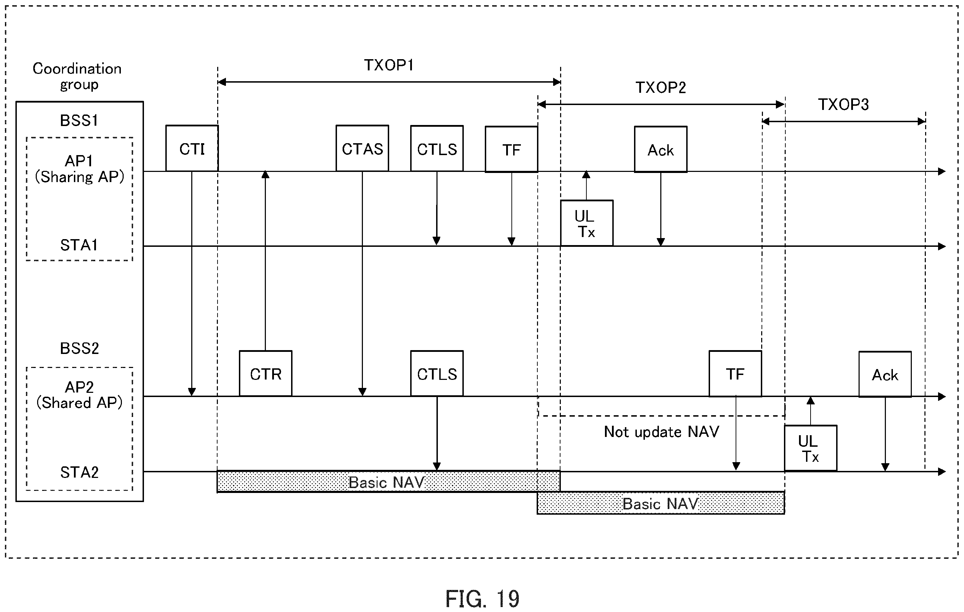

FIG 19 illustrates an example of the NAV control operation according to Example 2 of Method 1. In the example illustrated in FIG 19, AP1 (Sharing AP) and STA1 belong to BSS1, and AP2 (Shared AP) and STA2 belong to BSS2. In addition, in the example illustrated in FIG 19, AP1, AP2, STA1, and STA2 belong to a common coordination group.

In FIG 19, for example, like FIG 8, the TXOP obtained by AP1 (Sharing AP) may be divided into a plurality of TXOPs (for example, TXOP1, TXOP2, and TXOP3) on the basis of the timing of UL transmission of each of the STAs. Thus, for example, like STA2 illustrated in FIG 19, even when Basic NAV is set, UL transmission indicated in the Trigger frame from AP2 can be performed.

When the above-described NAV control method specified in 11ax is applied in the example configuration of the radio communication system illustrated in FIG 19 and when, for example, AP2 receives a Trigger frame destined for STA1 from AP1, AP2 updates (or sets) the Basic NAV, because the received signal is not destined for AP2. For this reason, transmission of the Trigger frame from AP2 to STA2 may be stopped.

In contrast, according to Example 2 of Method 1, AP 100 determines whether to update the NAV based on whether the received signal is transmitted from a terminal that belongs to the common coordination group.

For example, as illustrated in FIG 19, since AP2 and AP1 belong to a common coordination group, AP2 does not update the NAV even when AP2 receives a Trigger frame transmitted from AP1 to STA1.

As described above, according to Example 2 of Method 1, AP 100 does not update NAV when the sender of the received signal belongs to the common coordination group, and AP 100 updates NAV when the sender of the received signal does not belong to the common coordination group. This NAV control enables AP 100 to perform the cooperative transmission without being inhibited by the NAV settings set by the transmission signal of another AP 100 that belongs to the common coordination group, for example.

For example, even when AP 100 receives a transmission signal from a terminal that belongs to the coordination group, AP 100 may update the NAV as long as the signal is not a signal related to MAP coordination. AP 100 may determine whether the signal differs from a signal related to MAP coordination on the basis of, for example, the identifier (for example, BSSID or BSScolor for uncooperative transmission).

As described above, Method 1 is performed.

For example, according to Example 1 of Method 1 (FIG 18), an example of the operation performed by STA 200 has been described. According to Example 1 of Method 1, like Example 2, when AP 100 is notified of the information about TXOP by a signal transmitted from a terminal (AP/STA) that belongs to the common coordination group, AP 100 need not update the NAV. For example, in FIG 18, upon receiving a Trigger frame destined for STA1 from AP1, AP2 need not update the NAV.

### [Method 2]

According to Method 2, for example, when a terminal (AP/STA) receives a signal including the information about TXOP (that is, is notified of the information about TXOP) from another terminal that belongs to the common coordination group, the terminal updates the Intra-BSS NAV.

In addition, according to Method 2, when the terminal finds that the user information in a signal (for example, Trigger frame) transmitted from another terminal that belongs to the common coordination group includes the identifier (for example, AID) of the terminal itself, the terminal may respond without taking into account the Intra-BSS NAV. For example, the terminal may transmit a UL signal while ignoring the Intra-BSS NAV when the identifier of the terminal is included in the user information in a signal transmitted from another terminal that belongs to the common coordination group.

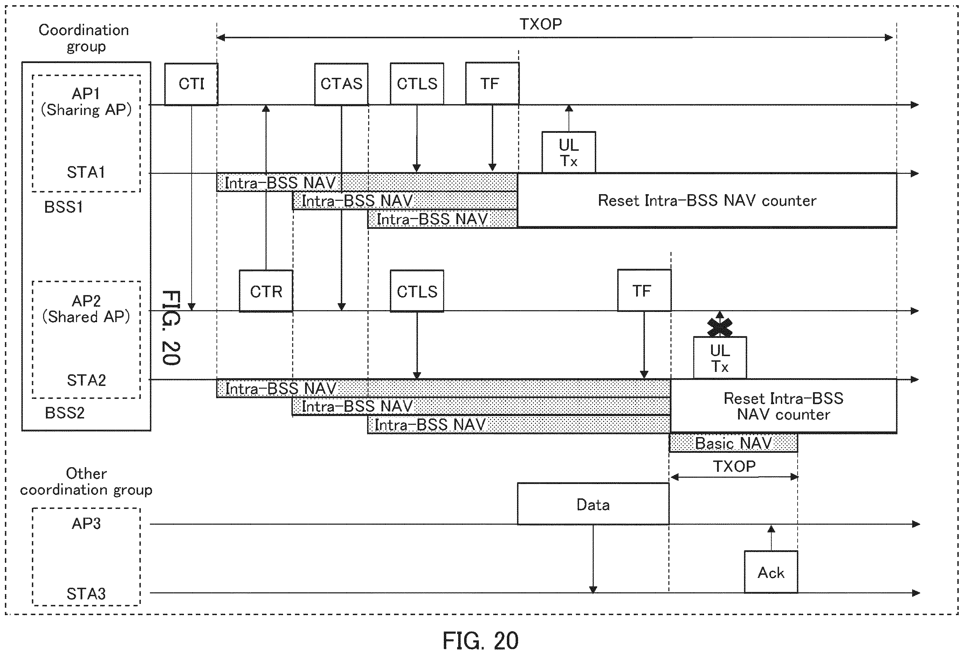

FIG 20 illustrates an example of the NAV control operation according to Method 2. In the example illustrated in FIG 20, AP1 (Sharing AP) and STA1 belong to BSS1, and AP2 (Shared AP) and STA2 belong to BSS2. In addition, in the example illustrated in FIG 20, AP1, AP2, STA1, and STA2 belong to a common coordination group. Furthermore, in the example illustrated in FIG 20, AP3 and STA3 do not belong to the common coordination group that is common to AP1, AP2, STA1, and STA2.

When the above-described NAV control method specified in 11ax is applied in the example configuration of the radio communication system illustrated in FIG 20, STA1 updates the Intra-BSS NAV by, for example, a signal from AP1 to AP2 (for example, CTI, CTAS) and updates the Basic NAV by a signal from AP2 to AP1 (for example, CTR). Similarly, when the above-described NAV control method specified in 11ax is applied, STA2 updates the Basic NAV by, for example, a signal from AP1 to AP2 (for example, CTI, CTAS) and updates the Intra-BSS NAV by a signal from AP2 to AP1 (for example, CTR).

Thus, for example, according to the 11ax NAV control method, STA1 updates the Basic NAV by a signal from AP2, and STA2 updates the Basic NAV by a signal from AP1. For this reason, transmission of the UL signal indicated by the Trigger frame from an AP that belongs to the common BSS may be stopped.

In contrast, according to Method 2, when the TXOP is notified by a signal transmitted from a terminal that belongs to the common coordination group, the terminal (AP/STA) updates the Intra-BSS NAV. For example, as illustrated in FIG 20, when STA1 and STA2 receive a signal destined for another terminal from AP1 and AP2 and when the sender terminal belongs to the common coordination group, STA1 and STA2 may update the Intra-BSS NAV (that is, not Basic NAV) regardless of the BSS to which STA1 and STA2 belong.

In addition, according to Method 2, for example, in the example illustrated in FIG 20, when STA1 is instructed to transmit a UL signal by a Trigger frame transmitted by AP1 that belongs to the common coordination group, STA1 may set the Intra-BSS NAV counter to 0 (that is, reset the Intra-BSS NAV counter) and perform UL transmission.

Like STA1, STA2 illustrated in FIG 20 sets the Intra-BSS NAV counter to 0 when UL transmission is instructed by a Trigger frame transmitted from AP2 that belongs to the common coordination group. However, as illustrated in FIG 20, even when the Intra-BSS NAV counter is set to 0 in STA2, STA2 stops UL transmission because Basic NAV is set in STA2 by a transmission signal from another terminal (for example, AP3) that does not belong to the common coordination group.

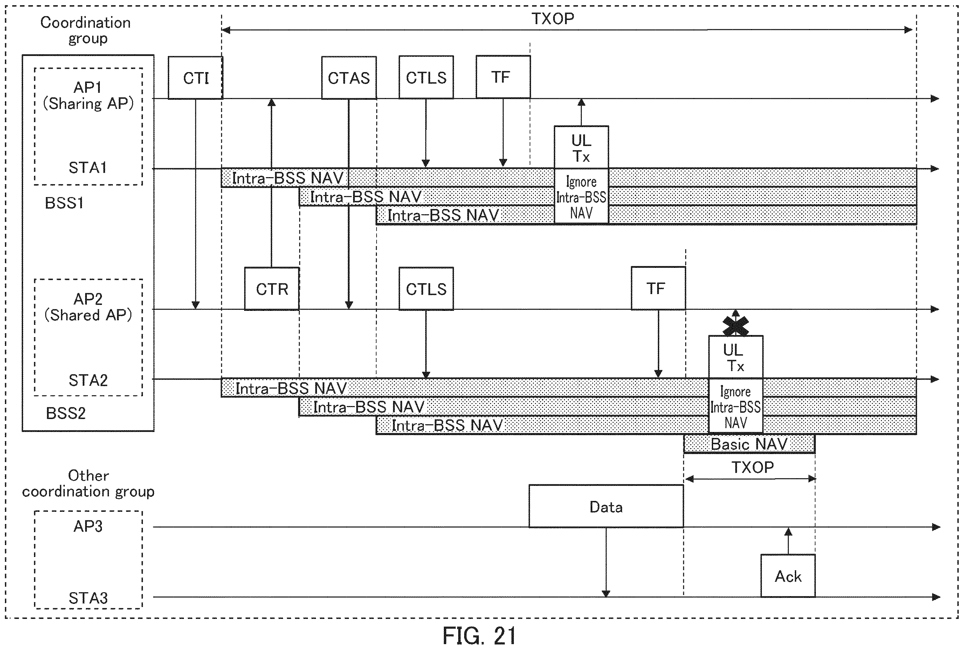

In FIG 20, the case has been described in which STA 200 sets the Intra-BSS NAV counter to 0 when instructed (requested) to transmit a UL signal by a Trigger frame transmitted from AP 100 that belongs to the common coordination group. However, the case is not limited thereto. For example, as illustrated in FIG 21, when STA 200 is instructed to perform UL transmission by a Trigger frame transmitted by AP 100 that belongs to the common coordination group, STA 200 may transmit a UL signal without taking into account (for example, while ignoring) the Intra-BSS NAV for a certain period of time (for example, the length of a signal transmitted in response to the Trigger frame or the time resource notified by the Trigger frame). For example, STA 200 may perform subtraction on the Intra-BSS NAV counter in accordance with the elapsed time even during the period of time during which Intra-BSS NAV is not taken into account.

Thus, according to Method 2, upon receiving a signal including the information about TXOP from a sender that belongs to the common coordination group, STA 200 may set the Intra-BSS NAV (for example, the transmission inhibition period for the common BSS). In addition, upon receiving a signal including the information about TXOP from a sender that does not belong to the common coordination group, STA 200 may set the Basic NAV (for example, Transmission Inhibition Period for the OBSS).

Upon receiving a Trigger frame that includes the user information destined for STA 200, STA 200 may cancel the Intra-BSS NAV settings. That is, STA 200 need not cancel the Basic NAV settings even when STA 200 receives a Trigger frame including the user information destined for STA 200.

Therefore, for example, the AP 100 can notify a terminal that belongs to the common coordination group of the information about the Intra-BSS NAV. This allows, for example, only the Intra-BSS NAV to be cancelled for STA 200 participating in cooperative transmission (STA 200 in the coordination group), thus enabling STA 200 to transmit a UL signal.

Furthermore, according to Method 2, for example, since the Intra-BSS NAV of STA 200 that does not participate in cooperative transmission (for example, STA 200 outside the coordination group) is not canceled, UL transmission by STA 200 that does not participate in cooperative transmission can be prevented. Still furthermore, for example, since the Intra-BSS NAV of STA 200 that belongs to the common coordination group is canceled while the Basic NAV is not canceled due to a transmission signal from a terminal that does not belong to the common coordination group, UL transmission performed by STA 200 that does not belong to the common coordination group can be prevented. Therefore, according to Method 2, contention in MAP coordination can be prevented.

### <Method 2-1>

According to Method 2-1, AP 100 may set, in the transmission signal, control information notifying that transmission is performed without taking into account the Intra-BSS NAV notified by a terminal that belongs to the common coordination group (while ignoring the Intra-BSS NAV). For example, STA 200 may receive the control information notifying that transmission is performed without taking into account the Intra-BSS NAV (for example, information about canceling of the settings of the Intra-BSS NAV corresponding to the common coordination group) and cancel the settings of the Intra-BSS NAV on the basis of the received information.

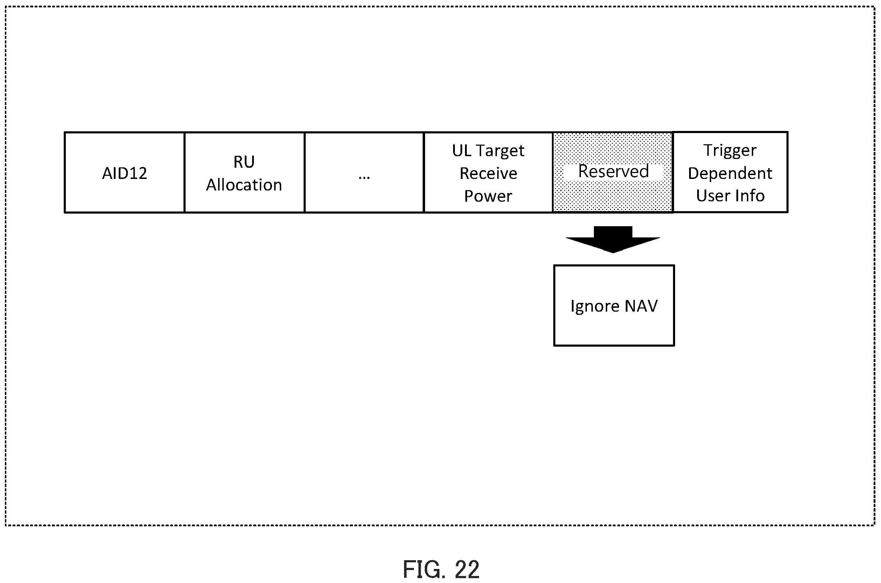

FIG 22 illustrates an example of a transmission signal (for example, Trigger frame) that includes the control information notifying of transmission without taking into account the Intra-BSS NAV.

As illustrated in FIG 22, the control information notifying of transmission without taking into account the Intra-BSS NAV (transmission performed while ignoring Intra-BSS NAV) (for example, an "ignore NAV" subfield) may be included in the user information in the Trigger frame. For example, when Ignore NAV = 1, STA 200 may cancel or temporarily ignore the Intra-BSS NAV and transmit the TB PPDU. For example, the period of time to ignore the Intra-BSS NAV may be notified to STA 200 by using a UL Length subfield in the Common field of the Trigger frame.

In contrast, for example, when ignore NAV = 0, STA 200 need not ignore the Intra-BSS NAV.

Thus, Method 2-1 allows, for example, AP 100 to notify each of STAs 200 of whether ignoring of the Intra-BSS NAV is applied, so that a specific STA 200 can ignore Intra-BSS NAV and transmit a UL signal. In addition, Method 2-1 allows AP 100 to notify another terminal of whether each of STAs 200 ignores the Intra-BSS NAV.

The above is the description of an example of the NAV control method in MAP coordination.

As described above, according to the present embodiment, AP 100 and STA 200 may switch between NAV control methods based on whether the received signal is a signal transmitted from a terminal (for example, AP/STA) that belongs to the common coordination group.

For example, like Method 1, in a common coordination group, each of the terminals does not have to update (set) a NAV even when the terminal receives a signal destined for another terminal. This prevents the AP 100 that belongs to the coordination group from failing to transmit a Trigger frame in MAP coordination, for example. In addition, this prevents STA 200 from failing UL transmission when a Trigger frame is received. As a result, according to the present embodiment, it can be avoided that cooperative transmission is inhibited by a NAV in MAP coordination.

For example, like Method 2, a terminal (AP/STA) that belongs to the common coordination group may update the Intra-BSS NAV on the basis of a signal related to the common coordination group, without updating the Basic NAV. This allows, for example, a rule to ignore NAV to be applied only to a terminal that belongs to the common coordination group, thus preventing the occurrence of contention caused by the rule to ignore the set NAV.

As described above, according to the present embodiment, it can be prevented that transmission and reception performed by AP/STA is inhibited by NAV control in MAP coordination, and cooperative communication in MAP coordination can be performed appropriately. As a result, the communication efficiency of cooperative communication in MAP coordination can be improved.

The above is the description of an embodiment of the present disclosure.

### (Other Embodiments)

(1) While the above embodiment has been described with reference to STA 200 that transmits a UL signal in CTDMA for MAP coordination, the coordination method is not limited to CTDMA, and another method can be employed.
(2) Example 2 of Method 1 and Method 2 may be applied in combination. For example, as illustrated in FIG 19, AP 100 need not update the NAV when receiving a signal destined for another terminal from a terminal that belongs to the common coordination group. In addition, for example, STA 200 may update the Intra-BSS NAV when receiving a signal destined for another terminal from a terminal that belongs to the common coordination group and ignore (for example, temporarily ignore) the Intra-BSS NAV when receiving a Trigger frame indicating transmission of a UL signal.
(3) Methods 1 and 2 according to the above-described embodiments have been described with reference to an example in which, as illustrated in FIG 1, negotiation between APs 100 (for example, the Tx Indication and Request phase and the Schedule Allocation phase) and cooperative transmission (the Data Tx phase) are performed within a single TXOP. However, the method is not limited thereto. For example, one non-limiting embodiment of the present disclosure may be applied to MAP coordination using a plurality of TXOPs.

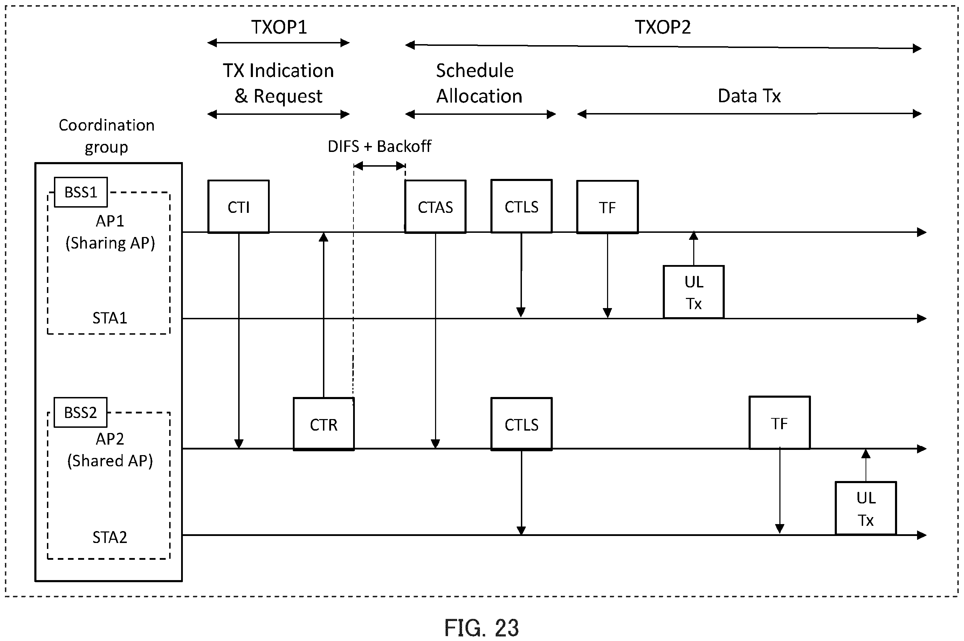

For example, as illustrated in FIG 23, a third-stage MAP coordination process may be performed over a plurality of TXOPs. In the example illustrated in FIG 23, in a first TXOP, the Tx Indication and Request phase may be performed to determine AP 100 that participates in MAP coordination and, in the second TXOP, the Schedule Allocation phase and the Data Tx phase may be performed.

The number of TXOPs and the combination of processes performed in each of the TXOPs illustrated in FIG 23 are only examples, and the present embodiment is not limited thereto.

(4) Method 1 and Method 2 according to the above-described embodiments may be applied to MAP sounding.

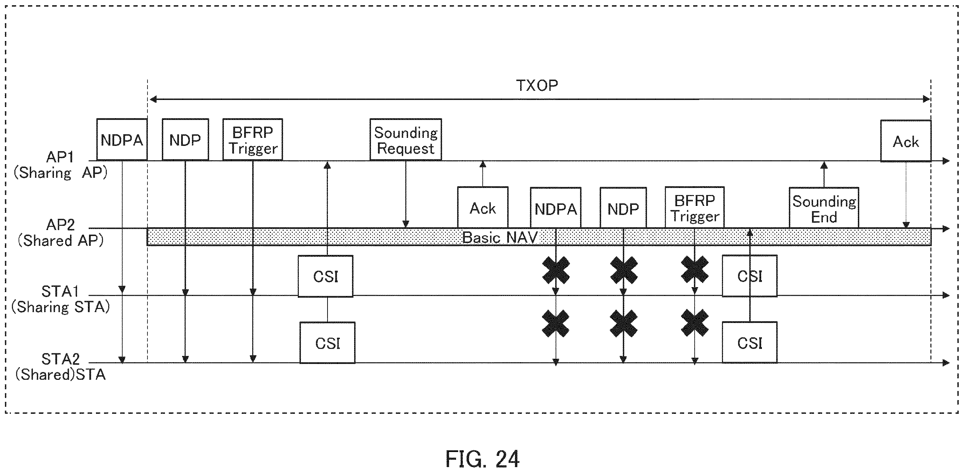

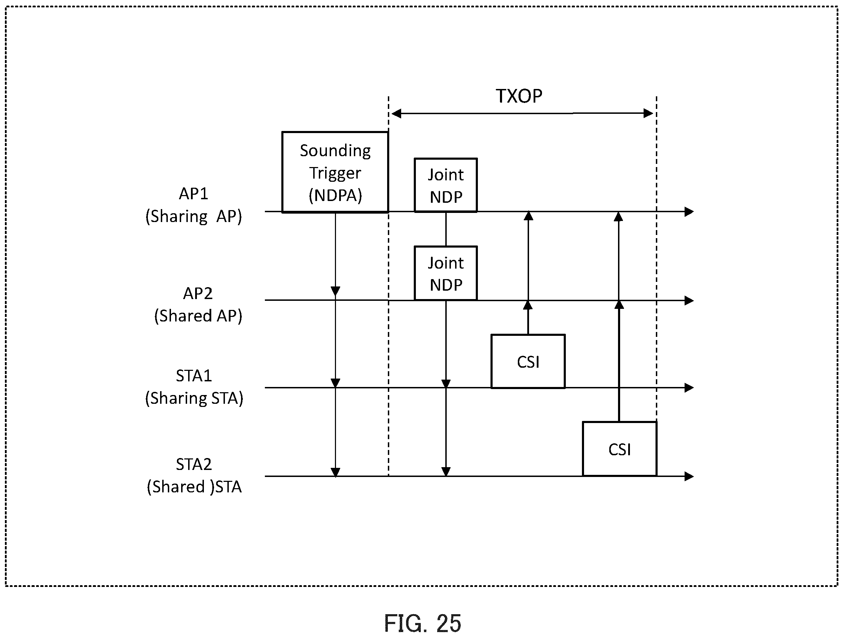

MAP sounding is a method for obtaining channel information in a cooperative manner by, for example, sounding performed between APs 100 in a cooperative manner. Examples of the sounding performed between APs 100 in a cooperative manner include sequential sounding illustrated in FIG 24 and joint sounding illustrated in FIG 25.

For example, in FIG 24 and FIG 25, STA1 is a sharing AP that belongs to AP1, which is a SHARING AP, and STA2 is a shared STA that belongs to AP2, which is a shared AP. For example, in sequential sounding illustrated in FIG 24, AP2 updates the Basic NAV by the TXOP notified by the Null Data Packet Announcement (NDPA) transmitted from AP1. Therefore, AP2 may stop transmission of the NDPA due to the Basic NAV.

At this time, for example, like Example 2 of Method 1, AP2 can achieve sequential sounding (for example, transmission of a signal, such as NDPA) by not updating the Basic NAV in the TXOP notified by the NDPA from AP1 that belongs to the common cooperative transmission group.

The timing at which MAP sounding is performed is not limited to specific timing.

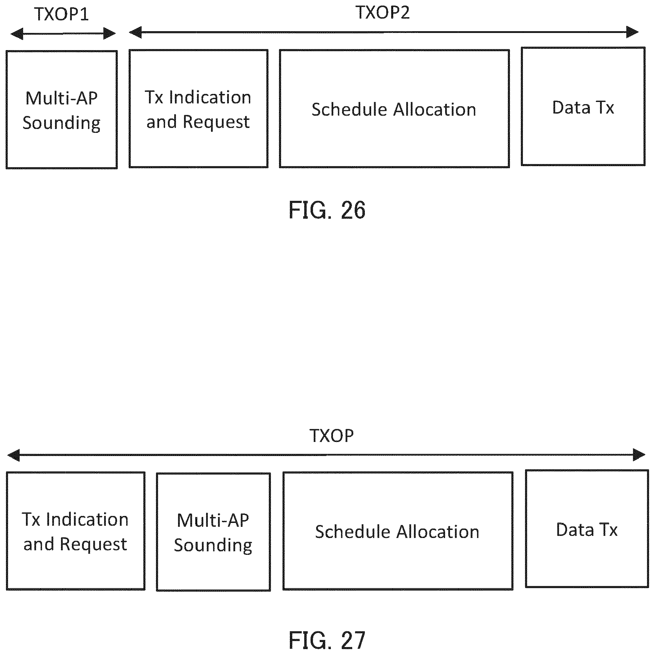

For example, as illustrated in FIG 26, Multi-AP sounding may be performed prior to determining whether to participate in MAP coordination through negotiation between APs 100, and channel information that is likely to be used for MAP coordination may be obtained in advance.

For example, as illustrated in FIG 27, after determination as to whether to participate in MAP coordination has been made through negotiation between APs 100, Multi-AP sounding may be performed to obtain the channel information to be used for cooperative transmission.

(5) While, according to Method 2, the method for notifying of temporary ignoring of Intra-BSS NAV has been described, the method for notifying of temporary ignoring of Intra-BSS NAV is not limited to a notification using the control information.

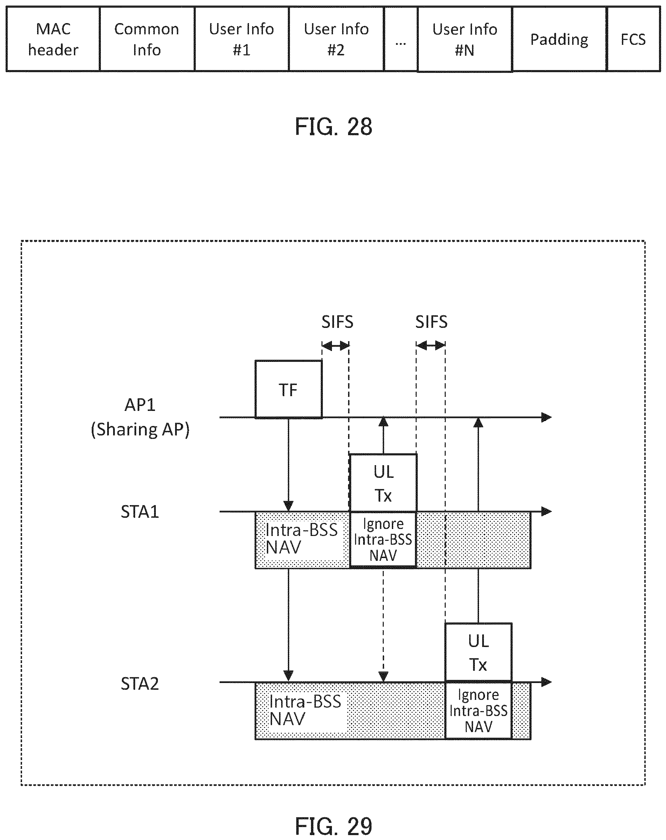

For example, AP 100 may indicate the order of STA 200 that ignores Intra-BSS NAV by the order in which the user information in the Trigger frame is transmitted (or the order in which the user information is placed in the Trigger frame). For example, as illustrated in FIG 28, when the Trigger frame includes a plurality of pieces of user information, STA 200 indicated by the first User Info #1 may ignore the Intra-BSS NAV and transmit a UL signal after a specified time (for example, Short Inter Frame Space (SIFS)) has elapsed since reception of the Trigger frame.

Similarly, STA 200 indicated by the Mth piece of the user information (where M is an integer greater than 1 and less than or equal to N (the maximum number of pieces of user information)) obtains the STA ID included in the (M - 1)th piece of the user information. For example, when STA 200 indicated by the Mth piece of user information detects the STA ID of the (M - 1)th piece of the user information in the received signal (that is, when STA 200 receives a signal from the (M - 1)th STA), STA 200 may transmit a UL signal after the SIFS.

The period of time during which the Intra-BSS NAV is ignored for a plurality of STAs 200 whose pieces of user information are included in the Trigger frame may be notified by using, for example, common information in the Trigger frame (for example, the UL Length subfield of Common Info).

FIG 29 illustrates an example of the operation to notify the order in which ignore NAV is applied by using the order in which user information is transmitted. As illustrated in FIG 29, STA1, which is indicated by the first piece of user information in the Trigger frame, transmits a UL signal after the SIFS from reception of the Trigger frame. In addition, as illustrated in FIG 29, STA2, which is indicated by the second piece of user information in the Trigger frame, transmits a UL signal after the SIFS from reception of the UL signal of STA1.

(6) According to Method 2, the period of time during which Intra-BSS NAV is ignored for a plurality of STAs 200 may be notified by using the common information in the Trigger frame. For example, the period of time during which the Intra-BSS NAV is ignored may be set in common for a plurality of STAs 200. In this case, the time length of the ignore NAV may be notified by using the common information of the Trigger frame (for example, the UL Length subfield of the Common Info).

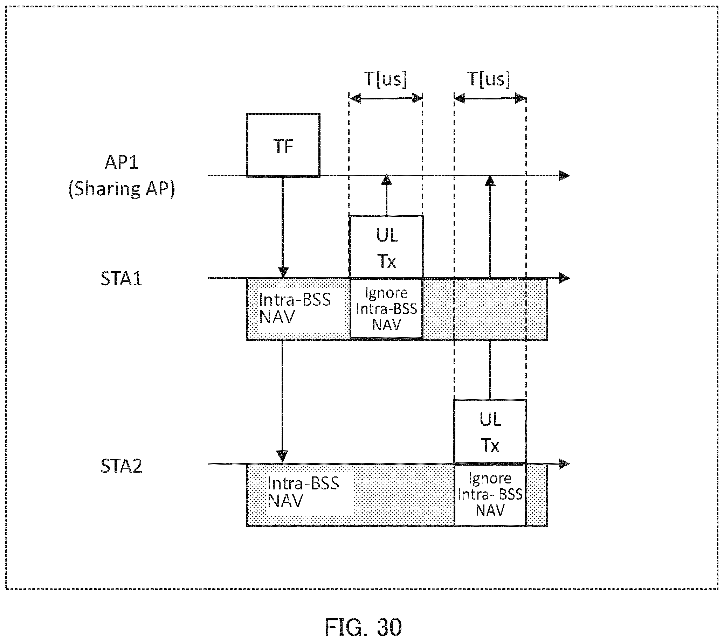

For example, as illustrated in FIG 30, AP1 notifies each of the STAs (STA1 and STA2) of the ignore NAV period (for example, T [us]) by using the UL Length subfield of the Trigger frame. STA1 may transmit a UL signal of T [us] length after the SIFS from reception of the Trigger frame. STA2 may transmit a UL signal of T [us] after the SIFS from reception of Trigger frame + T [us].

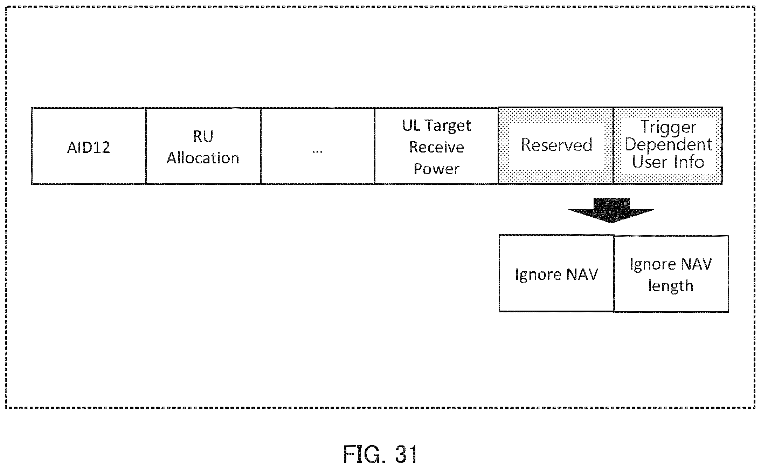

(7) In Method 2-1, STAs 200 may be individually notified of the ignore NAV time allocation information by the user information in Trigger frame. For example, as illustrated in FIG 31, AP 100 may use the Trigger Dependent User Info in the user information to notify of an ignore NAV length subfield.

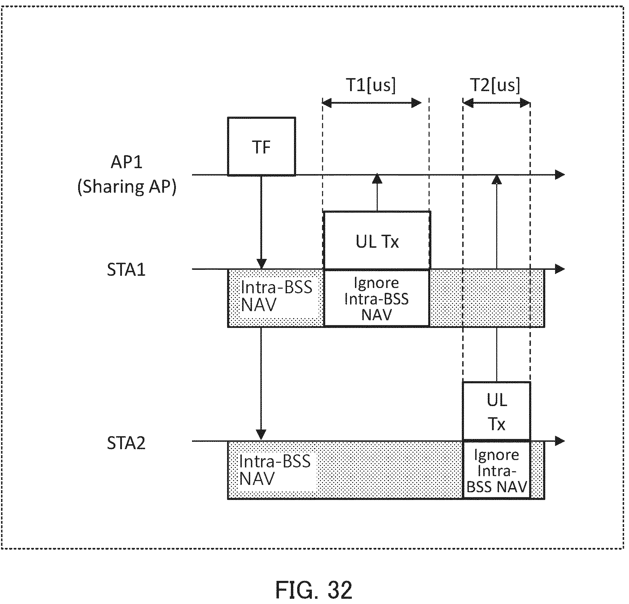

For example, as illustrated in FIG 32, AP1 may individually notify STA1 and STA2 of the ignore NAV time allocation information by using the User Info corresponding to each of STA1 and STA2. For example, as illustrated in FIG 32, STA1 may transmit a UL signal of T1 [us] length after the SIFS. STA2 may transmit a UL signal of T2 [us] after the SIFS from reception of the Trigger frame + T1 [us] + SIFS.

(8) While Method 2-1 has been described with reference to a notification technique in which the user information of the Trigger frame includes the control information (the ignore NAV subfield) notifying that the Intra-BSS NAV is temporarily ignored and transmission is performed, the technique is not limited thereto. The control information may be notified using other user information.

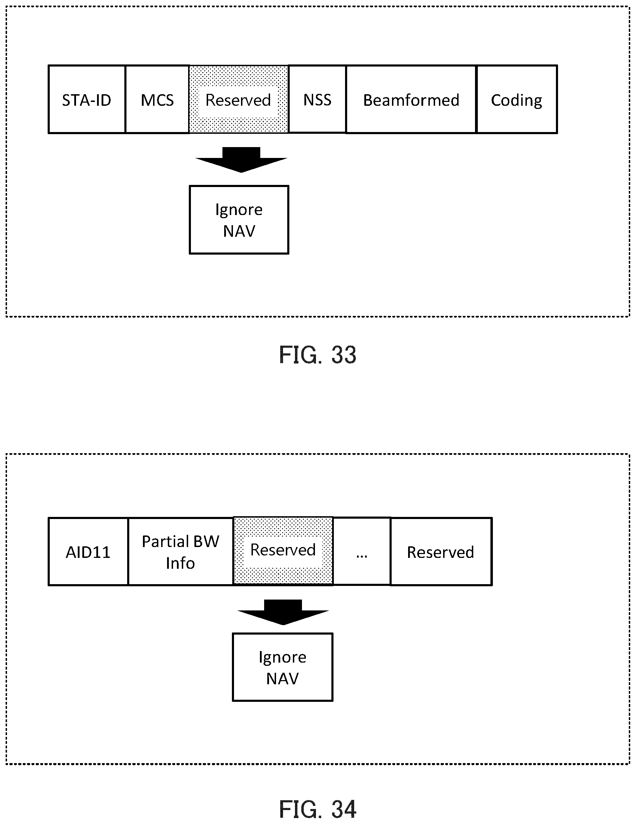

For example, as illustrated in FIG 33, the ignore NAV may be notified using a Reserved subfield included in the EHT-SIG user information (User field).

Alternatively, for example, as illustrated in FIG 34, the ignore NAV may be notified using a Reserved subfield included in the user information (an STA Info field) of the NDPA.

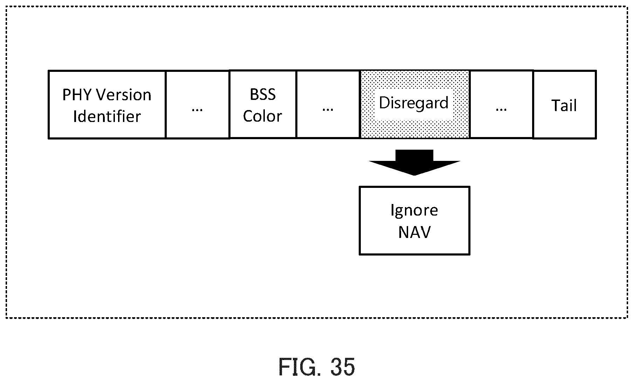

The information used to notify of the ignore NAV is not limited to the user information. For example, the ignore NAV may be notified in the common information. FIG 35 illustrates an example of the case in which the ignore NAV is notified in the common information. As illustrated in FIG 35, the ignore NAV may be notified using a Disregard subfield included in the U-SIG When the ignore NAV is notified in the common information, a terminal may control the NAV for each of the BSSs, for example. For example, when ignore NAV = 1, a terminal in a BSS with a BSS color that is common to the BSS color notified by the BSS color subfield in the U-SIG may temporarily ignore the Intra-BSS NAV and perform transmission.

(9) The application of Methods 1 and 2 is not limited to the MAP coordination. For example, Methods 1 and 2 may be applied to Triggered TXOP Sharing.

Triggered TXOP Sharing is a transmission method in which part of the TXOP obtained by AP 100 is allocated to STA 200 using a Multi-User (MU)-RTS TXOP Sharing (TXS) Trigger frame. Triggered TXOP Sharing can switch between two communication methods in accordance with the value of a TXOP Sharing Mode subfield included in the MU-RTS TXS Trigger frame.

The first communication method is that when TXOP Sharing Mode = 1 is notified in the MU-RTS TXS Trigger frame, STA 200 performs UL transmission to the belonging AP 100 during the TXOP allocated to STA 200.

The second communication method is that when TXOP Sharing mode = 2 is notified in the MU-RTS TXS Trigger frame, STA 200 performs transmission to the belonging AP 100 or another STA during the TXOP allocated to STA 200.

When TXOP Sharing Mode = 0, Triggered TXOP Sharing is not performed. The control signal (for example, CTLS in FIG 2) for the AP 100 to notify STA 200 of the scheduling information may be notified using the MU-RTS Trigger frame or the MU-RTS TXS Trigger frame.

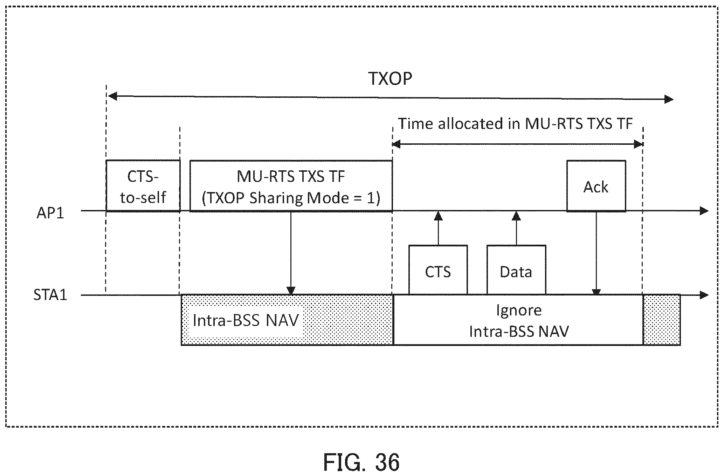

FIG 36 illustrates an example in which Method 2 is applied when TXOP Sharing Mode = 1. In the example illustrated in FIG 36, AP1 and STA1 belong to a common coordination group.

As illustrated in FIG 36, AP1 notifies another terminal of the TXOP by transmitting a CTS signal that includes the address of the AP1 in the destination information (the CTS signal is referred to as "CTS-to-self"). Upon receiving the CTS-to-self signal from AP1, STA1 updates the Intra-BSS NAV.

Subsequently, AP1 transmits a MU-RTS TXS Trigger frame including TXOP Sharing Mode = 1 to STA1 and allocates the TXOP to STA1. When the above-described NAV control method specified by 11ax is applied, STA1 may stop transmission from STA1 to AP1 due to the Intra-BSS NAV notified by AP1. In contrast, when Method 2 is applied and when STA1 is notified of Triggered TXOP Sharing by AP1 in the common coordination group, STA1 may temporarily ignore the Intra-BSS NAV during the time resource notified by the MU-RTS TXS Trigger frame. For example, after transmitting a CTS signal to AP1 in response to the MU-RTS TXS Trigger frame, STA1 may transmit a Data signal to AP1 by a PPDU that is not a TB PPDU.

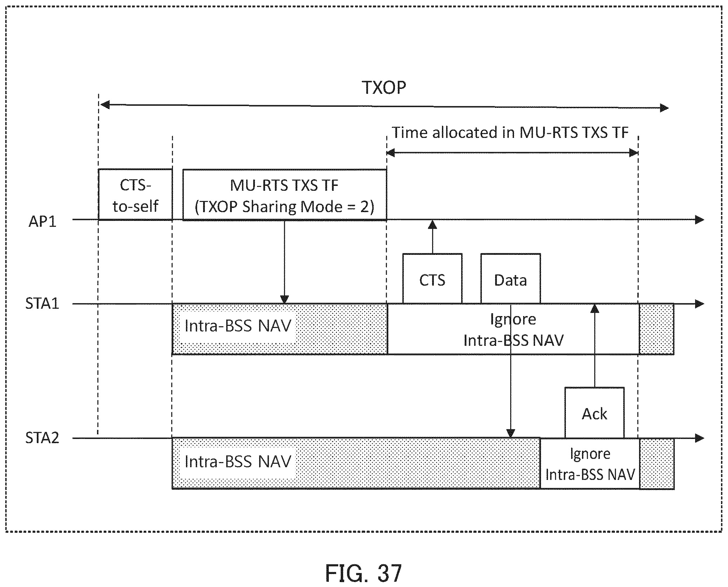

FIG 37 illustrates an example in which Method 2 is applied when TXOP Sharing Mode = 2. In the example illustrated in FIG 37, AP1, STA1, and STA2 belong to a common coordination group.

As illustrated in FIG 37, AP1 notifies STA1 and STA2 of the TXOP by transmitting a CTS-to-self signal. Upon receiving the CTS-to-self signal from AP1, each of STA1 and STA2 updates the Intra-BSS NAV.

Subsequently, AP1 transmits a MU-RTS TXS Trigger frame including TXOP Sharing Mode = 2 to STA1 and allocates the TXOP to STA1. When the above-described NAV control method specified by 11ax is applied, STA1 may stop transmission from STA1 to AP1 or STA2 due to the Intra-BSS NAV notified by AP1. Similarly, STA2 may also stop transmission from STA2 to STA1 due to the Intra-BSS NAV notified by AP1. In contrast, when Method 2 is applied and when STA1 is notified of Triggered TXOP Sharing by AP1 in the common coordination group, STA1 may temporarily ignore the Intra-BSS NAV during the time resource notified by the MU-RTS TXS Trigger frame.

For example, after transmitting a CTS signal to AP1 in response to a MU-RTS TXS Trigger frame, STA1 may transmit a Data signal to another STA (for example, STA2) by using a PPDU that is not a TB PPDU.

As illustrated in FIG 37, STA2 that has received the Data signal from STA1 in the common coordination group may temporarily ignore the Intra-BSS NAV in order to transmit an Ack signal in response to the Data signal.

(10) The values such as the number of APs, the number of STAs, and the number of BSSs used in the above example are only examples and are not limited to specific values. Other values may be set.

While the above embodiments have been described with reference to a configuration example based on the 11ax frame format as an example, the format according to one embodiment of the present disclosure is not limited to the 11ax format.

While the above embodiments have been described with reference to the operation performed in UL communication, one embodiment of the present disclosure is not limited to UL communication, but may be applied to DL communication or sidelink, for example.

The frame configurations (for example, the format) described above are only examples. The frame configurations are not limited to the above-described configurations, and the frame configurations may be other frame configurations. For example, some of the fields in these frame configurations need not be set, and other fields may be further set.

(11) Information as to whether STA 200 supports the functions, operations, or processes described in the above embodiments may be transmitted (or notified) from STA 200 to AP 100 as capability information or capability parameters of STA 200, for example.

The capability information may include information elements (IEs) that individually indicate whether STA 200 supports at least one of the functions, operations, or processes illustrated in each of the embodiments described above. Alternatively, the capability information may include an information element indicating whether STA 200 supports any combination of two or more of the functions, operations, or processes illustrated in each of the embodiments described above. The information element is also simply referred to as an "element".

AP 100 may determine (decide or assume) which functions, operations, and processes are supported (or not supported) by STA 200, which is the sender of the capability information, on the basis of, for example, the capability information received from STA 200. AP 100 may perform the operation, process, or control in accordance with the result of the determination based on the capability information. For example, AP 100 may control MAP coordination on the basis of the capability information received from STA 200.

STA 200 may consider the information notifying that STA 200 does not support some of the functions, operations or processes described in each of the embodiments above as restrictions placed on the some of such functions, operations or processes. For example, information or a request regarding such restrictions may be notified to the AP 100.

Information regarding the capabilities of or restrictions on STA 200 may be defined in, for example, the standard or may be associated with information known to AP 100 or information transmitted to AP 100 and be implicitly transmitted to AP 100.

(12) The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a radio transceiver (transceiver) and processing/control circuitry. The radio transceiver may comprise and/or function as a receiver and a transmitter. The radio transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A communication apparatus according to one example of the present disclosure is a communication apparatus comprising: reception circuitry, which, in operation, receives a signal; and control circuitry, which, in operation, changes a setting related to a transmission inhibition period based on whether a sender of the signal belongs to a group that is related to cooperative communication and that is common to the communication apparatus.

In one example of the present disclosure, the control circuitry determines whether the sender belongs to the group, based on identification information included in the signal.

In one example of the present disclosure, the control circuitry determines that the sender belongs to the group when user information destined for the communication apparatus is included in the signal.

In one example of the present disclosure, the control circuitry determines whether the sender belongs to the group, based on information about the group included in a beacon signal.

In one example of the present disclosure, the communication apparatus is a station (STA), and the control circuitry does not set the transmission inhibition period when the control circuitry receives the signal including information about a transmission opportunity from the sender that belongs to the group.

In one example of the present disclosure, the communication apparatus is an access point, and the control circuitry does not set the transmission inhibition period when the control circuitry receives the signal including information about a transmission opportunity from the sender that belongs to the group.

In one example of the present disclosure, the control circuitry sets a first transmission inhibition period for a Basic Service Set (BSS) that is common to the communication apparatus, when the control circuitry receives the signal including information about a transmission opportunity from the sender that belongs to the group, and the control circuitry sets a second transmission inhibition period for a BSS that differs from the BSS of the communication apparatus, when the control circuitry receives the signal including information about the transmission opportunity from the sender that does not belong to the group.

In one example of the present disclosure, the control circuitry cancels a setting of the first transmission inhibition period when the control circuitry receives a trigger frame including user information destined for the communication apparatus.

In one example of the present disclosure, the communication apparatus further includes: a reception circuitry that receives information about cancelling of a setting of the first transmission inhibition period, in which the control circuitry cancels the setting of the first transmission inhibition period based on the information.

A communication method according to one example of the present disclosure is a method comprising: receiving a signal by a communication apparatus; and changing a setting related to a transmission inhibition period by the communication apparatus based on whether a sender of the signal belongs to a group that is related to cooperative communication and that is common to the communication apparatus.

The disclosure of Japanese Patent Application No. 2021-128430, filed on August 4, 2021, including the specification, drawings and abstract, is incorporated herein by reference in its entirety.

### Industrial Applicability

One example of the present disclosure is suitable for use in radio communication systems.

### Reference Signs List

100 AP
101, 201 Radio receiver
102 Preamble demodulator
103 Data demodulator
104 Data decoder
105, 205 NAV controller
106 Scheduler
107 Data generator
108 Data coder
109 Data modulator
110 Preamble generator
111, 207 Radio transmitter
200 STA
202 Preamble demodulator
203 Data demodulator
204 Data decoder
206 Transmission signal generator

## Claims

1. A communication apparatus, comprising:
reception circuitry, which, in operation, receives a signal; and
control circuitry, which, in operation, changes a setting related to a transmission inhibition period based on whether a sender of the signal belongs to a group that is related to cooperative communication and that is common to the communication apparatus.

2. The communication apparatus according to claim 1, wherein:
the control circuitry determines whether the sender belongs to the group, based on identification information included in the signal.

3. The communication apparatus according to claim 1, wherein:
the control circuitry determines that the sender belongs to the group when user information destined for the communication apparatus is included in the signal.

4. The communication apparatus according to claim 1, wherein:
the control circuitry determines whether the sender belongs to the group, based on information about the group included in a beacon signal.

5. The communication apparatus according to claim 1, wherein:
the communication apparatus is a station (STA), and
the control circuitry does not set the transmission inhibition period when the control circuitry receives the signal including information about a transmission opportunity from the sender that belongs to the group.

6. The communication apparatus according to claim 1, wherein:
the communication apparatus is an access point, and
the control circuitry does not set the transmission inhibition period when the control circuitry receives the signal including information about a transmission opportunity from the sender that belongs to the group.

7. The communication apparatus according to claim 1, wherein:
the control circuitry sets a first transmission inhibition period for a Basic Service Set (BSS) that is common to the communication apparatus, when the control circuitry receives the signal including information about a transmission opportunity from the sender that belongs to the group, and
the control circuitry sets a second transmission inhibition period for a BSS that differs from the BSS of the communication apparatus, when the control circuitry receives the signal including information about the transmission opportunity from the sender that does not belong to the group.

8. The communication apparatus according to claim 7, wherein:
the control circuitry cancels a setting of the first transmission inhibition period when the control circuitry receives a trigger frame including user information destined for the communication apparatus.

9. The communication apparatus according to claim 7, further comprising:
a reception circuitry that receives information about cancelling of a setting of the first transmission inhibition period, wherein
the control circuitry cancels the setting of the first transmission inhibition period based on the information.

10. A communication method comprising:
receiving a signal by a communication apparatus; and
changing a setting related to a transmission inhibition period by the communication apparatus based on whether a sender of the signal belongs to a group that is related to cooperative communication and that is common to the communication apparatus.
